(19) **Europäisches Patentamt / European Patent Office / Office européen des brevets**

(11) **EP 4 182 579 B1**

(12) **EUROPEAN PATENT SPECIFICATION**

(45) Date of publication and mention
of the grant of the patent:
**12.03.2025  Bulletin 2025/11**

(21) Application number: **21746128.4**

(22) Date of filing: **13.07.2021**

(51) International Patent Classification (IPC):
**F16H 7/06** *(2006.01)*      **F16G 13/06** *(2006.01)*
**F16G 13/08** *(2006.01)*      **F16H 55/30** *(2006.01)*

(52) Cooperative Patent Classification (CPC):
**F16H 55/30; F16G 13/06; F16H 7/06**

(86) International application number:
**PCT/GB2021/051787**

(87) International publication number:
**WO 2022/013538 (20.01.2022 Gazette 2022/03)**

(54) **TRANSMISSION SYSTEM**

**ÜBERTRAGUNGSSYSTEM**

**SYSTÈME DE TRANSMISSION**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **17.07.2020  GB 202011083**
**25.11.2020  GB 202018496**
**18.02.2021  GB 202102302**
**10.06.2021  GB 202108320**

(43) Date of publication of application:
**24.05.2023  Bulletin 2023/21**

(73) Proprietor: **New Motion Labs Ltd.**
**Exeter**
**Devon EX2 4AN (GB)**

(72) Inventors:
• **PALMER, Josh Daniel**
**London E14 3GU (GB)**
• **LOBMEYER, Lucas**
**35792 Loehnberg (DE)**
• **FOWLER, Marcel**
**London SE19 3BS (GB)**

(74) Representative: **Potter Clarkson**
**Chapel Quarter**
**Mount Street**
**Nottingham NG1 6HQ (GB)**

(56) References cited:
**EP-A1- 0 611 000     EP-A2- 1 033 509
EP-A2- 1 120 586**

**Description**

This invention relates to a transmission system comprising a drive sprocket and a drive member and to a drive sprocket forming part of such a transmission system, and to a drive member forming part of the transmission system.

Drive sprockets, or pulleys, having a plurality of teeth for use with drive members such as power transmission chains or belts are well known, and often take the form of a substantially circular sprocket having a plurality of teeth spaced apart around an outer circumference of the sprocket.

A variety of different drive members may be used with such drive sprockets.

A first type of known drive member is a power transmission chain in the form of a roller chain. The roller chain has a plurality of engaging formations for enabling engagement with the drive sprocket. The engaging formations are in the form of receiving formations, for receiving the teeth of the drive sprocket. An example of a use of a roller chain is for a bicycle. The roller chain for a bicycle passes around a front drive sprocket in the form of a crank drive sprocket, and it also passes around a rear drive sprocket in the form of a gear wheel. The known roller chains are also able to be used in many other different types of apparatus including, for example, tricycles, motorcycles and chain saws.

A second type of known drive member is a power transmission chain comprising a silent chain. The silent chain also has a plurality of engaging formations for enabling engagement with the drive sprocket. The engaging formations are in the form of tooth formations for being received in receiving recesses formed between adjacent teeth on the drive sprocket. The silent chain is used for high torque applications which need high efficiency and the transfer of a lot of power.

Typical of such applications is the use of a silent chain as a timing chain for engines. The silent chain is also often referred to as a HY-VO chain.

A third type of know drive member is a belt which is adapted to engage with the teeth of a sprocket.

As is well known, a drive member enables transmission of power between drive sprockets. Known drive sprockets may drive the drive member as in the case of a front sprocket drive sprocket on a bicycle, or the drive sprockets may be driven by the drive member as in the case of rear gear drive sprockets on a bicycle.

It is known that power transmission chains are formed by chain links which are pivotally contacted together by pivots which extend transversely completely across the chain link.

The known drive members and known drive sprockets do not transmit power as efficiently as would be desired. More specifically, the known drive members invariably make contact with the drive sprockets under significant loads, and in such situations, the drive members frequently tend to move relative to the teeth of the sprocket whilst maintaining contact under this high loading. The result is that the known power transmission chains do not work efficiently on the drive sprockets.

Known power transmission drive members include power transmission chains or belts which are adapted to engage with the teeth of a drive sprocket or pulley.

For example, roller or bush chains, or hollow pins chains which are a variation of standard roller or bush chains are adapted to transmit rotational motion from one rotating shaft to another by meshing with the teeth of a sprocket attached to each of the shafts.

Standard bush chains comprise inner and outer links, where the inner links comprise two spaced apart inner plates connected by two bushes with press fits between plates and bushes. The outer links comprise two spaced apart outer plates connected by two pins with press fits between plates and pins. In standard roller chains, the bushes of the inner links pass through rollers which are free to rotate around the outer surface of the bushes and are contained within the inner link by the plates of the link. In both hollow pin chains and standard bush and roller chains, the links are connected by means of a pin of an outer link passing through the bush of an adjacent inner link. Adjacent outer and inner links are able to rotate relative to one another about this pin-bush interface whilst simultaneously carrying load. A chain of connected links is able to form a loop and articulate around multiple sprockets, transferring torque and rotary motion between the sprocket axes.

A hollow pin bush chain is similar to a standard bush chain except that the pins of the outer link are hollow. Such a configuration allows for attachments to be readily fitted to the chain, primarily for conveying purposes. Attachments may be fitted by inserting pins through the hollow pins of the chain. Hollow pins also allow the weight of the chain to be reduced whilst maintaining the stiffness of the components.

In known hollow pin bush chains, each tooth of a drive sprocket is received between two adjacent bushes. Each tooth makes contact with one of the two adjacent bushes and transfers load between the chain and the sprocket at this contact interface.

A disadvantage of such known power transmission chains is that power is not transmitted efficiently in many cases. More specifically, known power transmission drive members invariably make contact with drive sprockets under significant loads, and in such situations, the drive members frequently tend to move relative to the teeth of the sprockets whilst maintaining contact under this high loading. The result is that known power transmission members do not work efficiently on drive sprockets.

In addition, when the chain links of known drive members articulate at connecting pivots, friction leads to energy losses and component wear. This results in further efficiency losses and decreased drive lifetime.

European Patent application EP 0611000 A1 describes a tooth wheel intended to co-act with a transmission member with transmission elements, which tooth wheel bears a number of protrusions arranged on the periphery which are each provided with at least one contact surface for co-action with the transmission elements, comprising self-adjusting adjusting means for adjusting the pitch of the contact surfaces, wherein each protrusion can swivel substantially in the main plane of the tooth wheel round at least one centre outside the connecting line between the centre line of the tooth wheel and the zone of engagement between the contact surface and a transmission element. It is an object of the invention to embody a tooth wheel such that the distribution of the forces over the protrusions is better in the case of individual variations of the relevant pitch distances. With a view to this object the tooth wheel according to the invention has the feature that during a swivelling of the relevant protrusion the contact surface of the transmission element co-acting therewith undergoes a substantial radial displacement in relation to the tooth wheel.

## *Summary of the Invention*

According to the present invention there is provided a drive sprocket comprising a plurality of teeth for meshing with a drive member to transmit rotary motion, the drive member including a plurality of engagement pockets engaging the teeth of the drive sprocket, wherein each tooth has a tooth profile defined by a first side comprising a first engagement surface and an opposite second side comprising a second engagement surface, and characterized in that, said engagement surfaces are configured such that when driven, a tooth meshes to the engagement pocket at a first contact location on the first engagement surface and also at a second contact location on the second engagement surface, wherein the first contact location is radially offset from the second contact location.

By means of the present invention, during use of the drive sprocket, each tooth of the sprocket will engage with the drive member at two contact locations on opposite sides of each tooth. In addition, the first contact location will, during use be radially offset from the second contact location.

Such an arrangement reduces the stress on the sprocket during use thereby reducing the wear and tear on the drive sprocket as well as the frictional losses, thereby increasing transmission efficiency.

In addition, the radial offset of the first and second contact locations helps to prevent the engagement pocket of the drive member from becoming wedged, or stuck, on a tooth during use of the drive sprocket.

By means of the present invention, therefore, secure engagement of the pitch pocket with the tooth may be achieved as the drive member makes contact with the drive sprocket. In addition, the stress on the drive sprocket as the load is transferred between the drive sprocket and the drive member is distributed to reduce localised peak stresses. Further, disengagement of the pitch pocket from the tooth may be reliably achieved.

In embodiments of the invention, each tooth has a front face and a back face, the shape of which front and back faces being defined by the first and second sides, wherein the shape of each face is symmetrical about a radial axis of the tooth, and the sides of the faces are defined at least partially by two arcs. An advantage of having a tooth where the shape of the front and back faces is symmetrical, is that it is possible for the drive sprocket to rotates in both a forward and a reverse direction. A symmetric tooth also enables applications with only one drive direction to handle torque reversal during operation. This results in the drive sprocket being more adaptable to different uses.

Each arc defines a side of a tooth and has a radius of R, the centres of the arcs being at a distance x from one another, and at a perpendicular distance, y, from the centre of the drive sprocket, and wherein the centre of each arc is at +x/2,y.

In embodiments of the invention, adjacent teeth are spaced apart from one another by a connecting portion of the sprocket.

In such embodiments of the invention, the tolerance of a transmission system incorporating a drive sprocket according to embodiments of the invention to dimensional variations within the system's components will be increased.

There is provided a transmission system comprising a drive sprocket according to embodiments of the first aspect of the invention, and further comprising a drive member, which drive member is adapted to engage with the drive sprocket.

The drive member comprises a plurality of engagement pockets, each of which engagement pockets comprises a first engaging surface and a second engaging surface spaced apart from the first engaging surface, the first and second engaging surfaces forming an engagement surface pair, which pair is rotatable about a rotational axis, wherein adjacent engagement pockets are connected to one another by connecting members.

Adjacent engagement pockets are connected to one another by a primary link, which primary link is rotatable about the rotational axis of the engagement surface pair.

The drive member may engage with the teeth of the drive sprocket, such that each engagement pocket is adapted to receive a tooth of the drive sprocket and to engage with the tooth at first and second engaging surfaces. Because adjacent engagement pockets are connected to one another by a primary link which is rotatable about the rotational axis of the engagement surface pair, the tooth will thus mesh to the engagement pocket such that the first contact location engages with the first engaging surface, and the second contact location engages with the second engaging surface.

The tooth is thus securely held by the engagement pocket such that little or no movement of the tooth relative to the pocket is possible once the tooth has meshed to the engagement pocket. In addition, because the first and second contact locations are radially offset relative to one another during use of the transmission system, the tooth is less likely to become stuck, or wedged in the engagement pocket compared to when there is no radial offset.

Each primary link is rotatable about the rotational axis of each adjacent engagement pocket. This facilitates the articulation of the drive member.

The drive member comprises a plurality of first primary links which are coplanar with one another and are pivotally connected to one another at first and second pivot points, which pivot points are spaced apart from one another such that adjacent first primary links are pivotable about the axis of rotation of each adjacent engagement pocket.

Such an arrangement may be desirable when the drive member comprises a power transmission chain, for example.

The drive member comprises a plurality of second primary links coplanar with one another and pivotally connected to one another at first and second pivot points, which pivot points are spaced apart from one another such that adjacent second primary links are pivotable about the axis of rotation of each adjacent engagement pocket, wherein the first primary links are connected to the second primary links such the first and second primary links are substantially parallel to one another, and the first pivot points of the first links are coaxial with the second pivot points of the second links, and the second pivot points of the first links are coaxial with the first pivot points of the second links.

Each engagement pocket comprises first and second transverse members each having a first end and a second end, the first and second transverse members being spaced apart from one another, wherein the first and second engaging surfaces are formed on the first and second transverse members respectively.

In such embodiments, the secondary links may be parallel with the primary links, and the transverse members may be substantially perpendicular to the primary and secondary links.

Each engagement pocket comprises a first secondary link positioned at, or close to the first ends of the first and second transverse members, and a second secondary link positioned at, or close to the second ends of the transverse members, wherein the first and second secondary links are parallel with one another. In such embodiments of the invention, first and second secondary links may be positioned opposite one another with the first and second transverse members extending substantially parallel to one another and substantially perpendicularly to the first and second secondary links. Each engagement pocket is thus defined by the first and second secondary links and the first and second transverse members.

The first and second transverse members each have a radius r, wherein the distance between the first and second transverse members of an engagement pocket is p2, and the distance between first and second pivot points of a primary link is p.

The first and second transverse members comprise first and second rollers respectively, each of which first and second rollers may have a radius r and may be rotatable about their respective axes. In other embodiments, the first and second transverse members may comprise first and second pins respectively, each of which first and second pins may have a radius of r and may not be rotatable. In still other embodiments, the first and second transverse members comprise first and second curved surfaces each surface having a radius of curvature of r.

There is provided a drive member forming part of a transmission system according to embodiments of the invention.

There is provided a power transmission drive member adapted to mesh with a drive sprocket to transmit rotary motion, the drive member comprising a plurality of engaging mechanisms, each comprising an engaging body comprising an engagement pocket adapted to engage with the drive sprocket, each of which engagement pockets comprising a first engaging surface and a second engaging surface spaced apart from the first engaging surface, the first and second engaging surfaces forming an engaging surface pair, which pair is rotatable about an engaging mechanism rotational axis, wherein the power transmission drive member comprises a carrier, which carrier is articulated and is adapted to support the plurality of engaging mechanisms.

Each tooth of the drive sprocket will engage with an engaging body by contacting both the first engaging surface and the second engaging surface during use.

Such an arrangement reduces both the stress on the sprocket during use, and the relative movement between the chain and sprocket when engaged, thereby reducing wear and tear on the drive member as well as the drive sprocket. In addition, frictional losses are reduced thereby increasing transmission efficiency.

Because the carrier is articulated, the engaging bodies supported by the carrier are able to articulate around the drive sprocket during use.

The first and second engaging surfaces are positioned symmetrically relative to the rotational axis in respect of engaging bodies.

The engaging surfaces are configured such that when driven, a tooth of the sprocket meshes to the engagement pocket at a first contact location on the first engaging surface, and also at a second contact location on the second engaging surface.

The first contact location is radially offset from the second contact location during use.

This helps to prevent the engagement pocket of the drive member from becoming wedged or stuck on a tooth during use.

The first and second engaging surfaces are formed on first and second pins respectively.

The pins are formed integrally with the remainder of the engaging body, whilst in other embodiments the pins are formed separately to the remainder of the engaging body. In such embodiments, the pins may be attached to the remainder of the engaging body by any convenient method and may be attached to the attachment portion by means of a press fit, for example.

The first and second pins may be circular in cross-section. In other embodiments of the invention, one or both of the first and second pins may be partially circular in cross-section. For example, one of both of the first and second pins could have a semi-circular cross-sectional shape, and the respective engaging surface would be formed on a part of the pin that has a curved surface.

Each engaging mechanism comprises two engaging bodies, which engaging bodies are spaced apart from one another.

Each engaging mechanism comprises a connecting member having a first end and an opposite second end, and attachable to one engaging body at the first end, to the other engaging body at the second end, and extending colinearly with the rotational axis of the respective engaging mechanism wherein each engaging body of a respective engaging mechanism comprises a front face and an opposite back face, wherein the engaging surfaces of each engaging body extend from the front face of a respective engaging body, and the connecting member extends from the back face of each engaging body, which connecting member is adapted to enable connection of a respective engaging mechanism to the carrier.

Because the connecting member extends between the back faces of each engaging body, the connecting member may extend into the carrier in order to secure each engaging body to an opposite side of the carrier, with the engaging surfaces of each engaging body extending outwardly, away from the carrier.

The connecting member is attached to a respective engaging body by means of a press fit with the engaging body.

This means that each engaging body will rotate with the connecting member. The engaging bodies cannot rotate independently of rotation of the connecting member. This can be advantageous, since each engaging member of an engaging mechanism will rotate with the other engaging body forming the respective engaging mechanism.

The connecting member may be attached to a respective engaging body by means of a clearance fit.

The engaging body is free to rotate independently about the connecting member.

This can be advantageous in embodiments of the invention where the carrier is, for example, a bush chain. Such chains do not comprise hollow pins.

In embodiments of the invention comprising a connecting member, the connecting member may extend transversely through the carrier whereby a first engaging body may be positioned on a first side of the carrier and a second engaging body may be positioned on a second, opposite side of the carrier.

The engaging bodies may thus face outwardly from the carrier, with each engaging mechanism having a first engaging body on one side of the carrier, a second engaging body on an opposite side of the carrier, such that engagement with the teeth of a drive sprocket takes place externally to the carrier.

This is in contrast to known power transmission drive members such as bush chains where the chain engages with the teeth of a sprocket within the structure of the chain. In addition, because the connecting member is coaxial with the engaging mechanism rotational axis, each engaging body of an engaging mechanism is rotatable about the axis of the connecting member, and thus both engaging bodies rotate about the same axis.

The connecting member may take any convenient form, and may for example, comprise a pin.

The connecting member may be regarded as a central pin of the respective engaging mechanism.

Each engaging body may comprise a receiving portion adapted to receive the connecting member, which receiving portion comprises an aperture, the centre of which is coaxial with the rotational axis of a respective engaging mechanism.

By means of the aperture formed in each engaging body, it is possible to attach, or connect another component to the engaging body, whilst allowing rotation of the engaging body about the rotational axis.

The carrier comprises hollow pins extending transversely at least partially across the carrier at spaced apart intervals along the length of the carrier, wherein each connecting member extends through a hollow pin to thereby connect the engaging mechanisms to the carrier.

An engaging body may be fitted to each end of a connecting member so that one engaging body is on one side of the carrier, and the other engaging body is on the opposite side of the carrier, and both engaging bodies are external to the carrier with the engaging surfaces extending away from the carrier.

The carrier may comprise a hollow pin bush chain.

The connecting member may be attached to each engagement body press fit. This means that the engagement bodies will rotate with the connecting member.

The carrier may take different form and may not be a hollow pin bush chain. For example, the carrier could be a standard bush chain rather than a hollow pin bush chain.

The carrier comprises pins extending transversely at least partially across the carrier at spaced apart intervals along the length of the carrier, wherein each connecting member comprises a pin extending across the carrier between the engaging bodies of a respective engaging mechanism and through the aperture of each engaging body, wherein the pin is shaped to form an interference fit with the link plates of the bush chain, and a clearance fit with the apertures of each engaging body.

The engaging bodies are rotatable about the axis of a respective pin independently of the bush.

An advantage of the present invention is therefore, that a standard chain, such as a hollow pin bush chain may be adapted so that it engages with either two sprockets, or a single sprocket with two sets of teeth, whereby the teeth of the sprocket or sprockets mesh with engagement pockets positioned externally to the chain.

The planes of symmetry of both engaging bodies may be parallel to one another, such that the engaging surfaces of each engaging body are aligned with one another.

The power transmission drive member may be adapted to mesh with two drive sprockets, which drive sprockets are spaced apart from one another such that the teeth of a first drive sprocket engage with the engaging bodies on a first side of the carrier, and the teeth of a second drive sprocket engage with the engaging bodies on the second, opposite side of the carrier.

The carrier and the engaging mechanisms are adapted to articulate around the drive sprockets making contact via the engaging mechanisms. The two sprockets are positioned on either side of the carrier, with the teeth of one drive sprocket engaging with the engaging bodies on a first side of the carrier, and the teeth of a second sprocket engaging with the engaging bodies on a second, opposite side of the carrier.

The power transmission drive member comprises a single drive sprocket, which drive sprocket comprises two sets of teeth, which sets of teeth are spaced apart from one another.

The carrier and the engaging mechanisms may be adapted to articulate around the drive sprocket making contact via the engaging mechanisms. The two sets of teeth are positioned on either side of the carrier, with the first set of teeth engaging with the engaging bodies on a first side of the carrier, and the second set of teeth engaging with the engaging bodies on a second, opposite side of the carrier.

As mentioned above, in some embodiments of the invention, the carrier may comprise a standard hollow pin bush chain or a standard bush chain with solid pins. Such chains come in several predetermined sizes based on specific applications and international standards. The dimensions of these known chains are dependent on the sprocket with which a particular known chain is designed to engage. Key dimensions are the bush diameter and the inner width of the chain. The inner width of the chain is the distance between the inner surfaces of the two inner plates forming an inner link in the chain. Because the teeth of the drive sprocket, or drive sprockets engage with the engaging bodies externally to the chain, by means of the invention, there is no longer a need for the chain to interact with a sprocket tooth by conventional contact with a bush. This means that the width of the chain may be greatly reduced to the point that a sprocket tooth would not be able to fit within the remaining space.

Furthermore, the space in which a conventional roller chain tooth typically sits can be completely removed such that the inner link of the chain can be reduced to a single plate. Such a design reduces the number of components to the chain and allows the width of the chain to be drastically reduced, thereby reducing the width of the required sprocket and thus the entire system.

The inner link may be thicker than the outer link.

The inner link of the chain may comprise a composite inner link formed from a plurality of thinner link plates. An advantage of such an embodiment is that by manufacturing thinner link plates, it is possible to readily manufacture a composite link having a desired thickness by combining an appropriate number of the thinner link plates.

Each engaging mechanism comprises first and second extension members which extension members are spaced apart from, and coaxial with one another, and each have first and second end portions, wherein the extension members extend across the width of the engaging mechanism and through each engaging body such that the first and second end portions of each extension member extend from the first face of each engaging body, away from the carrier to form a pin, wherein the first engaging surfaces of each engaging body are formed on the first and second end portions respectively of the first extension member, and the second engaging surfaces of each engaging body are formed on the first and second end portions respectively of the second extension member, .

The first and second extension members serve to connect the two engaging bodies to one another; thus, parts of the engaging mechanism are integrally formed.

The power transmission drive member may be a chain formed from links, comprising a body portion and first and second legs extending from the body portion to define a space between the legs and the body portion, wherein each leg comprises a hollow pin receiving portion, wherein the hollow pin receiving portion of a first leg of a link is coaxial with the rotational axis of a first engaging mechanism, and the hollow pin receiving portion of the second leg of the link is coaxial with the rotational axis of a second, adjacent, engaging mechanism, and wherein each connecting member is adapted to extend through a respective hollow pin and engaging body, to thereby link the engaging bodies to the links, such that each engaging body is rotatable about its rotational axis, the space of each link providing space for such rotation.

There is an aperture, the hollow pin receiving portion of the first leg of a link will be coaxial with the aperture of a first engaging body, and the hollow pin receiving portion of the second leg of a link will be coaxial with the aperture of a second, adjacent engaging body, and the hollow pins will extend through the apertures of the engaging bodies.

By means of the present invention, when the chain is in tension, there is little, or no force transmitted to the central pin of the engaging mechanism. This means that the central pin is free to rotate about its axis regardless of the loading condition of the chain. This increases the efficiency of power transmission since during engagement, as the engaging mechanism rotates upon making contact with the tooth, it does so without significant load at its contact interface with the interior surface of the hollow pin chain or pin link, thereby greatly reducing the frictional losses.

On the other hand, it is possible that when travelling between sprockets, because the engaging mechanisms are essentially free to rotate without any resistance, they may adopt an undesirable orientation with respect to the teeth of the sprockets with which they are to engage. In other words, a position in which the orientation of the engaging body may cause it to get stuck on top of a tooth rather than adopting the correct position with engaging surfaces either side of the tooth may occur. If this situation arises, then it can either rectify itself by snapping into position when the chain tension increases sufficiently to pull it into position, causing undesirable vibrations and wear, or it may remain stuck in the incorrect position and disrupt the engagement of the following engaging mechanisms, thereby increasing the tension of the system and potentially causing the whole system to fail.

The carrier comprises angle of rotation limiters adapted to limit the rotation of the engaging mechanisms.

The angle of rotation limiters may comprise stops formed on the carrier, such as folded portions, punched portions, and punched and folded portions. Such portions provide physical stops to the rotational movement of the engaging mechanisms.

The angle of rotation limiters may be formed on the links of a chain forming the carrier.

Each engagement body comprises an engagement pocket adapted to engage with the drive sprocket, each of which engagement pockets comprising a first engaging surface and a second engaging surface spaced apart from the first engaging surface, the first and second engaging surfaces forming an engaging surface pair, which pair is rotatable about an engaging mechanism rotational axis, wherein the power transmission drive member comprises a carrier, which carrier is articulated and adapted to support the plurality of engaging bodies.

By means of present invention, each tooth of the drive sprocket will engage with an engaging body by contacting both the first engaging surface and the second engaging surface during use.

The engaging mechanisms forming part of the present invention are thus dual engaging mechanisms ensuring dual engagement of the teeth of a sprocket engaged with a power transmission drive member according to the first aspect of the invention.

There is provided an engaging mechanism forming part of a power transmission drive member according to the first aspect of the invention.

There is provided a power transmission system comprising a power transmission drive member according to the first aspect of the invention, and a drive sprocket, wherein the power transmission drive member is adapted to mesh with the drive sprocket to transmit rotary motion.

There is provided a drive sprocket comprising a plurality of teeth for meshing with a drive member to transmit rotary motion, the drive member including a plurality of engagement pockets engaging the teeth of the drive sprocket, wherein each tooth has a tooth profile defined by a first side comprising a first engagement surface and an opposite second side comprising a second engagement surface, which engagement surfaces are configured such that when driven, a tooth meshes to the engagement pocket at a first contact location on the first engagement surface and also at a second contact location on the second engagement surface, the first contact location being radially offset from the second contact location, and wherein each tooth has a front face and a back face, the shape of which faces being defined by the first and second sides such that the shape of each face is symmetrical about a radial axis of the tooth, and the first side of each face is defined at least partially by a first face arc, and the second side of each face is defined at least partially by a second face arc, wherein the distance between the centre of the first face arc and the centre of the second face arc of each tooth is substantially the same as the distance between the centre of the first face arc of a first tooth and the centre of the second face arc of an adjacent tooth.

By means of the present invention therefore a drive sprocket is provided in which not only is each tooth symmetrical, and all teeth are shaped substantially the same, but the distance between adjacent teeth is defined by the radius of an arc forming the first face arc and the second face arc.

The first face arc forms a base portion of the first side of each tooth, and the second face arc forms a base portion of the second side of each tooth, wherein the first and second face arcs each comprise a roller seating curve.

The roller seating curve is adapted to receive a roller or other engaging part of the drive member which is adapted to mesh with the sprocket.

Each first and second side comprises a second portion comprising a convex arc extending from a respective roller seating curve towards a tip portion of a respective tooth.

The second portion comprising a convex arc may comprise a working curve. The convex arc shape of the working curve allows the drive member to articulate during engagement and disengagement without making contact with a tooth of the sprocket.

The drive sprocket may further comprise a supporting curve extending from the roller seating curve of a first tooth towards the roller seating curve of an adjacent tooth.

The supporting curve is adapted to receive a roller or other member of the drive member to support the roller or other member.

There is provided a transmission system comprising a drive sprocket according to embodiments of the first aspect of the invention, and further comprising a drive member, which drive member is adapted to mesh with the drive sprocket.

There is a plurality of engagement pockets, each of which engagement pockets comprising a first engaging surface and a second engaging surface spaced apart from the first engaging surface.

The drive member comprises a roller chain and the engagement pockets are defined between adjacent rollers forming the roller chain. An engaging pocket of a drive member is considered to be a pair of parallel cylindrical rollers at a fixed distance from one another, forming a space in which the teeth of the drive member are adapted to sit.

Where the drive member comprises a roller chain, an engagement pocket is defined between adjacent rollers of the roller chain.

When an engagement pocket is engaged with a tooth, it has a single degree of freedom only. This is the articulation of the engagement pocket about the centre of the respective roller.

The roller chain has a pitch p, and the distance between the centre of the first face arc and the centre of the second face arc of each tooth, and the distance between the centre of the first face arc of a first tooth and the centre of the second face arc of an adjacent tooth is substantially equal to p.

Two rollers will be positioned between adjacent teeth of the sprocket to form an engagement pair. This means that every other engagement pocket will engage with a tooth of the sprocket because only every other pair of rollers will be positioned around a tooth to form an engagement pair of rollers. The remaining pairs of rollers will be positioned between adjacent teeth of the sprocket and so the engagement pockets of these roller pairs will not be in contact with a tooth.

This is advantageous since only half of the rollers will be load bearing during articulation of the drive member on the sprocket. The other half will be supporting and will therefore have reduced contact load during their articulation. This in turn decreases some of the transmission system wear and frictional losses leading to higher transmission efficiency.

This is in sharp contrast to known sprockets for use with roller chain drive members where each roller is positioned between two adjacent teeth during use of the sprocket.

Where the drive member is a roller chain, the radius of each roller is substantially equal to, or slightly smaller than, the radius of each seating curve.

By means of the present invention, the rollers of the roller chain will be supported by the roller seating curve in such a way that the engagement pocket defined between adjacent rollers of the drive member will mesh with the tooth such that the engagement pocket meshes at two contact locations.

Due to the dimensions of the arc defining the roller seating curve, and due to the radius of each roller relative to that arc, during use of the transmission system, the roller chain will engage such that two rollers are positioned between adjacent teeth.

In addition, the radius of the first face arc and second face arc remains substantially the same regardless of the number of teeth on the sprocket.

This simplifies the production process of the sprocket.

During use of the transmission system, a first roller or other drive member engaging part, will be a load bearing roller or part, and a second roller or drive member part will serve as a supporting roller or part. When a roller or other engaging part is acting as a support it may be supported and received by the roller seating curve.

There is provided a transmission system comprising a drive sprocket and a drive member adapted to mesh with the drive sprocket, the drive sprocket comprising a plurality of teeth for meshing with the drive member to transmit rotary motion and the drive member comprising a plurality of engagement pockets adapted to engage the teeth of the drive sprocket,

wherein each tooth of the drive sprocket has a tooth profile defined by a first side comprising a first engagement surface and an opposite second side comprising a second engagement surface, which engagement surfaces are configured such that when driven, a tooth meshes to an engagement pocket at a first contact location on the first engagement surface and also at a second contact location on the second engagement surface, the first contact location being radially offset from the second contact location,

wherein the drive member comprises a roller chain comprising a plurality of spaced apart rollers, each roller being spaced apart from adjacent rollers by a predetermined distance, and connected to an adjacent roller by a rigid connecting member extending between two adjacent rollers whereby the engagement pockets are defined between adjacent rollers,

wherein, a first engagement pocket is formed by first and second rollers which are adjacent to one another, a second engagement pocket is formed by the first roller and a third roller, and a third engagement pocket is formed by the second roller and a fourth roller, the third roller being adjacent to the first roller, and the fourth roller being adjacent to the second roller,

and wherein an angle formed between a connecting member connecting the first and second rollers, and a connecting member connecting the first and third rollers, comprises a first articulation angle, and an angle formed between the connecting member connecting the first and second rollers, and a connecting member connecting the second and fourth rollers comprises a second articulation angle,

wherein, the magnitude of the first articulation angle formed when the first second and third rollers are all in contact with a tooth is different to the magnitude of the second articulation angle formed when the first second and fourth rollers are all in contact with a tooth.

A transmission system is provided in which the articulation angle at a first roller that is in contact with a first tooth at a first contact point is different to the articulation angle at a second roller which is in contact with the same tooth on an opposite side of the tooth at a second contact point when a third roller is in contact with a second tooth adjacent to the first tooth on the first side of the first tooth, and a fourth roller is in contact with a third tooth adjacent to the first tooth on the second side the first tooth.

The drive member may be regarded as comprising a plurality of articulation points, and the articulation angles are defined at the articulation points.

The connecting members comprise links. In such embodiments of the invention, the links articulate about the articulation points, and the articulation angles define the degree of articulation between a first link and a second link.

A roller is situated on each articulation point such that each tooth is engaged by two rollers where:

the two roller contact points are on opposite sides of the tooth;
the contact points are radially offset from one another; and
the distance between two adjacent roller centres is always the same.

By having the magnitude of the first articulation angle not equal to the magnitude of the second articulation angle, the efficiency of the sprocket is improved. This is because in a conventional roller chain, alternate links articulate via two different types of articulation, known as bush articulations and pin articulations. During pin articulations, the pin of the articulating link rotates within the bush of the adjacent link which remains stationary relative to the sprocket. In bush articulations, the bush of the articulating link rotates within the roller and around the pin of the adjacent link which remains stationary relative to the sprocket. Bush articulations thus cause sliding at two surfaces during articulation, whilst pin articulations cause sliding at only one. This means that more energy is lost during a bush articulation than during a pin articulation. On a conventional roller chain, the articulation type alternates each articulation. By means of the present invention, the net energy losses of the drivetrain can be reduced by reducing the size of the articulation angle associated with the less efficient bush articulation and increasing the size of the articulation angle associated with the more efficient pin articulation.

The difference in articulation angle can also be employed to reduce the wear at the pin-bush interface that leads to chain elongation, known as chain stretch. The load at the pin-bush interface during bush articulations is less than that during pin articulations. This means that bush articulations lead to more wear than pin articulations. By means of the present invention, the net pin-bush wear in the drive member can be reduced by reducing the size of the articulation angle associated with the higher wearing pin articulation and increasing the size of the articulation angle associated with the lower wearing bush articulation

The first roller is a load bearing roller, and the second roller is a supporting roller.

The magnitude of the first articulation angle is greater than the magnitude of the second articulation angle.

The magnitude of every other articulation angle is the same. In such embodiments, the articulation angle will therefore alternate between two values.

Where the first roller is a load bearing roller and the second roller is a support roller the first articulation angle at each load bearing roller will be the same, and the second articulation angle at each support roller will the same.

There may be a different variation between the articulation angles at articulation points around the sprocket. The magnitude of the articulation angles may be chosen to suit the prevailing conditions.

The shape of each tooth face is symmetrical about a radial axis of the tooth.

The first side of each face is defined at least partially by a first face arc, and the second side of each face is defined at least partially by a second face arc.

The first face arc forms a base portion of the first side of each tooth, and the second face arc forms a base portion of the second side of each tooth, wherein the first and second face arcs each comprise a roller seating curve.

The roller seating curve is adapted to receive a roller or other engaging part of the drive member which is adapted to mesh with the sprocket.

Each first and second side comprises a second portion comprising a convex arc extending from a respective roller seating curve towards the tip portion of a respective tooth.

The second portion comprising a convex arc may comprise a working curve. The convex arc shape of the working curve allows the drive member to articulate during engagement and disengagement without making contact with a tooth of the sprocket.

The drive sprocket may further comprise a supporting curve extending from the roller seating curve of a first tooth towards a roller seating curve of an adjacent tooth.

The supporting curve is adapted to receive a roller to support the roller.

The roller chain comprises a plurality of inner links, each of which serves to connect two rollers to form a roller pair, and a plurality of outer links, each of which serves to connect roller pairs to one another to form the roller chain, such that a space is defined between inner surfaces of facing inner links, and also between inner surfaces of facing outer links wherein each tooth has a width which is the same as, or slightly less than the distance between inner surfaces of facing outer links, and greater than the distance between inner surfaces of facing inner links.

Because each tooth of the sprocket has a width which is the same as, or slightly less than the distance between inner surfaces of facing outer links, the tooth will fit between facing outer links with very little clearance between outside surfaces of the tooth and the inside surfaces of the facing outer links. The width of the tooth will also prevent the teeth from engaging between facing inner links, so the sprocket will be able to engage with the teeth between outer links only, and not between inner links. This helps to maintain the alignment of the roller chain during use.

This is in sharp contrast to the situation in known transmission systems, where, because the width of each tooth is less than the distance between inner surfaces of facing inner links, it is possible for the teeth of a known sprocket to engage with either the inner links or the outer links of the chain. This means that when the teeth of a known sprocket engage with the outer links, there will be significant clearance between the outside surfaces of the tooth and the inside surfaces of facing outer links.

Each tooth of the sprocket comprises a first width which is the same as or slightly less than the distance between inner surfaces of facing inner links, and a second width that is the same as or slightly less than the distance between the inner surfaces of facing outer links.

The portion of each tooth that has the first width prevents the inner links from interfering with the tooth when the tooth is engaged between facing outer links.

There is provided a sprocket forming part of a transmission system according to embodiments of the first aspect of the invention, and further comprising a drive member comprising a plurality of spaced apart rollers.

## BRIEF DESCRIPTION OF THE DRAWINGS

Embodiments of the invention will now be further described by way of example only with reference to the accompanying drawings in which:

Figure 1 is a schematic representation of a drive sprocket according to an embodiment of the first aspect of the invention;

Figure 2 is a detailed representation of a part of the drive sprocket of Figure 1;

Figure 3 is a schematic representation of the drive sprocket of Figures 1 and 2 engaged with a drive member according to embodiments of the third aspect of the invention and comprising a power chain, to form a transmission system according to embodiments of the second aspect of the invention;

Figure 4 is a more detailed schematic representation of the transmission system of Figure 3;

Figure 5 is a schematic representation of the transmission system of Figures 3 and 4 with the primary links from one side removed;

Figures 6, 7 and 8 are schematic representations of part of the transmission system as shown in Figure 5 showing the position of the secondary links during rotation of the drive sprocket;

Figures 9 and 10 are schematic representations showing dimensions of the primary and secondary links of the transmission chain;

Figure 11 is a schematic representation showing the position of the arc centres defining the sides of the teeth of the drive sprocket relative to the centre of the drive sprocket;

Figure 12 is a schematic representation showing the radial offset of the first and second contact locations of a tooth of the drive sprocket of Figure 1; and

Figure 13 is a schematic diagram showing the dimensions of the drive sprocket shown in Figures 1 and 2.

Figure 14 is a power transmission drive member according to an embodiment of the invention in which the carrier comprises a hollow pin chain with a plurality of engaging bodies articulated around a drive sprocket;

Figure 15 is an exploded view of a portion of the hollow pin chain of Figure 14 showing the links of the chain;

Figure 16 is a detailed representation of links of the hollow pin chain of Figure 14;

Figure 17 is an exploded view of two engaging mechanisms forming part of the power transmission drive mechanism of Figure 14, showing the connecting members of each engaging mechanism passing through the pins of the hollow pin chain of Figure 14;

Figure 18 is a schematic representation of an engaging mechanism forming part of the chain of Figure 14;

Figure 19 is a schematic perspective view of an engaging body suitable for forming part of an engaging mechanism forming part of a drive transmission drive member according to embodiments of the invention;

Figure 20 is a schematic representation of a drive sprocket suitable for engaging with the drive member of Figure 14;

Figure 21 is a schematic representation of an embodiment of a power transmission member with a thinner width than that of the power transmission drive member of Figure 14, articulated around a drive sprocket also having a thinner width than that of the sprocket of Figure 20;

Figure 22 is a schematic representation of a portion of the chain of Figure 21;

Figure 23 is a sectional view of a portion of the chain shown in Figure 22 showing the engaging mechanisms in place;

Figure 24 is a schematic representation of a portion of a chain according to another embodiment of the invention showing engagement bodies connected to the links of the chain;

Figure 25 is a schematic representation of the links of Figure 24 without the engagement bodies;

Figure 26 is an exploded schematic representation of a part of a chain according to another embodiment of the invention in which the inner links are formed from a plurality of link plates;

Figure 27 is an exploded schematic representation of part of a chain according to another embodiment of the invention in which the chain is a bush chain with solid pins;

Figure 28 is a schematic perspective view of a part of the chain shown in Figure 27 without the engaging bodies in place;

Figure 29 is an exploded schematic representation of a portion of a chain forming a power transmission drive member according to another embodiment of the invention;

Figure 30 is an exploded schematic representation of the portion of the chain of Figure 29 showing hollow pins extending through the chain;

Figure 31 is a perspective view from above of the portion of the chain of Figure 29;

Figure 32 is a perspective view from above of the portion of the chain of Figure 29 having engaging surfaces formed from single bodies extending across the width of a chain; and

Figure 33 is a schematic representation of an outer link plate with angle limiters formed thereon.

Figure 34 is a schematic representation of a roller chain engaged with a sprocket according to an embodiment of the invention and forming a transmission system according to an embodiment of the invention;

Figure 35 is a schematic representation of the transmission system of Figure 34 with some links removed to show more clearly how the rollers of the chain engage with the sprocket;

Figure 36 is a perspective view of part of the sprocket of Figure 34 showing the tooth profile of the teeth of the sprocket;

Figure 37 is a schematic representation of the transmission system of Figure 34 showing how the rollers of the roller chain engage with the teeth of the sprocket;

Figure 38 is a schematic representation of the transmission system of Figure 34 showing where the engagement pockets lie during use of the transmission system;

Figure 39 is a schematic representation showing the dimensions of the rollers of the roller chain shown in Figure 34;

Figure 40 is a schematic representation of the sprocket arc construction of the transmission system shown in Figure 34; and

Figure 41 is a schematic representation showing movement of the rollers caused by wear of the drive member shown in Figure 34.

Figure 42 is a schematic representation of the transmission system of Figure 34 showing how the rollers of the roller chain engage with the teeth of the sprocket and showing the articulation angles;

Figure 43 is a schematic representation of a polygon formed by the articulation points of a sprocket forming part of a transmission system according to an embodiment of the invention;

Figure 44 is a schematic representation of the polygon of Figure 43 superimposed on the sprocket of Figure 42 showing the rollers arranged around the sprocket;

Figure 45 is a schematic representation of a portion of the roller chain of Figure 34 showing inner links and outer links;

Figure 46 is a schematic representation of a sprocket according to another embodiment of the invention wherein each tooth has a first width and a second width, the second width being greater than the first width; and

Figure 47 is a schematic representation showing the sprocket of Figure 46 engaged with a standard roller chain of the type shown in Figure 45.

## DETAILED DESCRIPTION

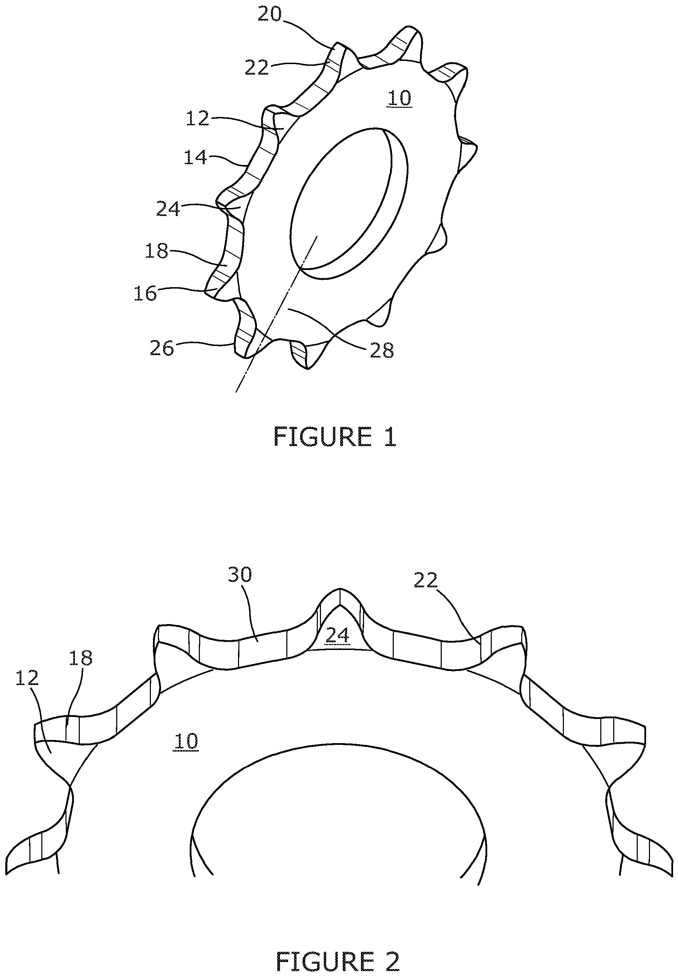

Referring initially to Figures 1 and 2, a drive sprocket according to an embodiment of the first aspect of invention is designated generally by the reference numeral 10.

The sprocket 10 comprises a plurality of teeth 12 that are spaced apart from one another around an outer circumference 14 of the sprocket 10.

Each tooth has a tooth profile defined by a first side 16 comprising a first engagement surface 18, and an opposite second side 20 comprising a second engagement surface 22. Each tooth further comprises a front face 24 and a back face 26, the shape of which faces being defined by the first and second sides 18, 20, which in this embodiment comprise first and second engagement surfaces. The shape of each face is symmetrical about a radial axis 28 extending along the length of each tooth.

The shape of each side 16, 20 is defined at least partially by an arc. Because each tooth 12 is symmetrical about the axis 28, the dimensions of the arcs forming all sides is the same.

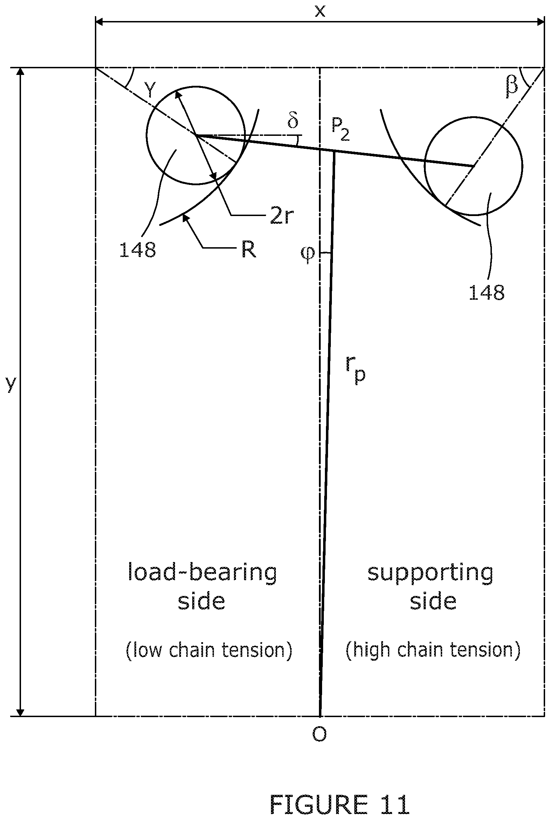

Referring now to Figure 11, it can be seen that in this embodiment, each arc defining a side of a tooth 12 has a radius of R. The centres of the arcs are at a distance x from one another, and at a perpendicular distance $y$, from the centre of the drive sprocket. The centre of each arc is at $\pm x/2, y$. Adjacent teeth 12 are separated from one another to define a connecting portion 30, as shown in Figure 2, for example. In the illustrated embodiment, the connecting portion is substantially flat. However, it is to be understood that in other embodiments of the invention the connecting portion may not be flat, or there may not be a connecting portion at all.

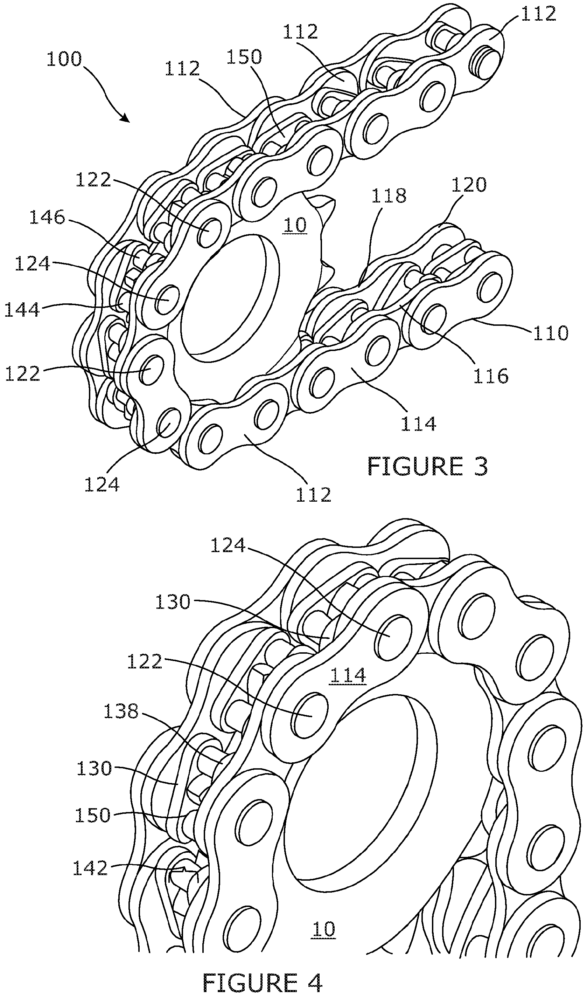

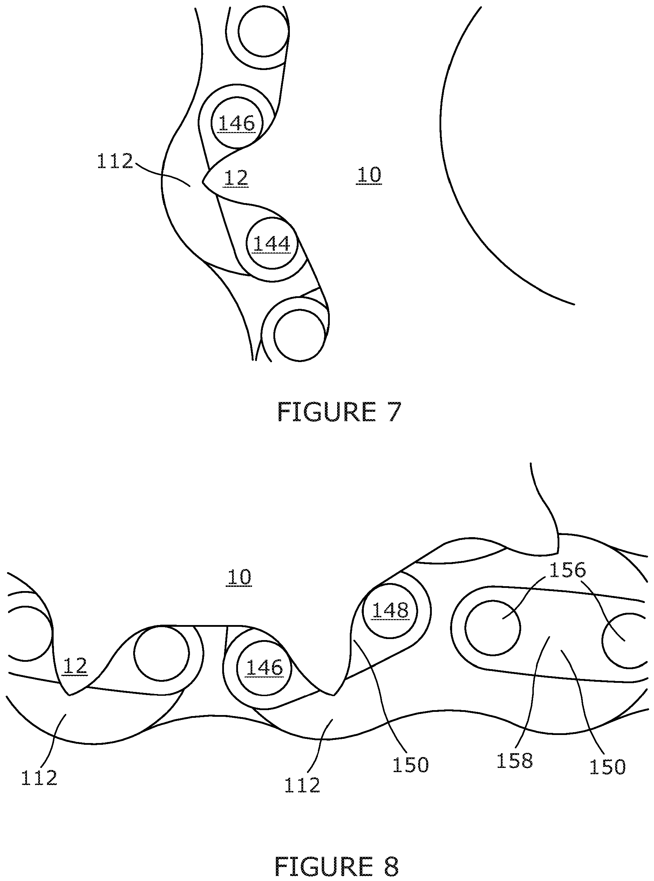

Turning now to Figures 3 to 8, a transmission system according to an embodiment of the second aspect of the invention is designated generally by the reference numeral 100. The transmission system 100 comprises the sprocket 10 illustrated in Figures 1 and 2 and described hereinabove. The transmission system 100 further comprises a power transmission chain 110. The power transmission chain 110 is adapted to engage with the sprocket 10 as will be described hereinbelow in order to enable transmission of power between the drive sprocket 10 and another drive sprocket (not shown).

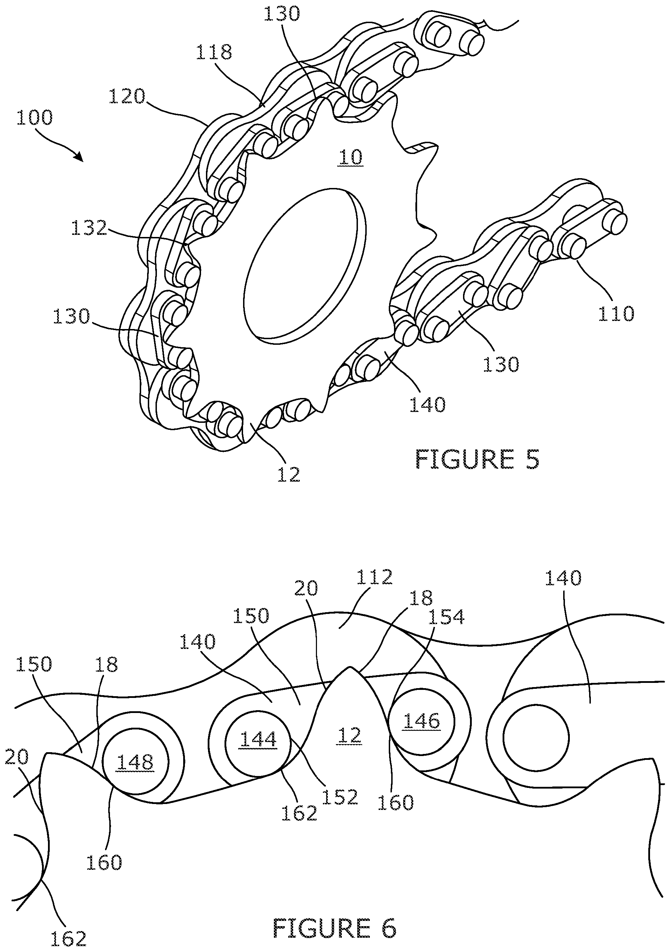

As shown particularly in Figures 6, 7 and 8 for example, the power transmission chain 110 comprises a plurality of engagement pockets 150 extending along the chain 110.

Each engagement pocket 150 comprises a first engaging surface 152, and a second engaging surface 154 which is spaced apart from the first engaging surface 152. The first and second engaging surfaces 152, 154 together form an engaging surface pair 156.

Each engaging surface pair 156 is rotatable about a rotational axis 158. Adjacent engagement pockets 150 are connected to one another by at least one primary link 112, which primary link 112 is rotatable about the rotational axis 158.

In this embodiment there is a set of first primary links 114 which are co-planar with one another, a set of second primary links 116 which are co-planar with one another, a set of third primary links 118 which are co-planar with one another and a set of fourth primary links 120 which are also co-planar with one another. Each set of primary links is substantially parallel with each other set of primary links.

The primary links 112 in a particular set, which are co-planar to one another, are also pivotally connected to one another. Each primary link 112 has a first pivot point 122, and a second pivot point 124, the first and second pivot points 122 and 124 being spaced apart from one another along each primary link 112, such that adjacent primary links 112 are pivotable about the first and second primary pivot points 122, 124.

In the illustrated embodiment of the invention, the first 114 and second 116 primary links are connected to and abut one another such that the first pivot point 122 of a first primary link 114 is coaxial with the second pivot point 124 of a second primary link 116, and *vice versa.*

Similarly, the third 118 and fourth 120 primary links are connected to and abut one another such that the first pivot point 122 of a third primary link 118 is coaxial with the second pivot point 124 of a fourth primary link 120, and *vice versa.*

The power transmission chain 110 further comprises a plurality of secondary links 130 each of which secondary links is adapted to rotate substantially about the rotational axis 158 of the respective engagement pocket 150. Each secondary link 130 is positioned to be substantially parallel with a respective primary link 112 such that the rotational axis 158 of a particular engagement pocket 150 is coaxial with the first 122, or second 124, pivot points of the corresponding primary links 112. This in turn means that adjacent primary links 112 are pivotable about the axis of rotation 158.

In this embodiment, the plurality of secondary links 132 comprises a plurality of first secondary links 138, and a plurality of second secondary links 140. Each first secondary link 138 abuts a second primary link 116, and each second secondary link 140 abuts a third primary link 118.

In this embodiment, two first secondary links 138 abut each second primary link 116, and two second secondary links 140 abut each third primary link 118.

In this embodiment of the invention, the first secondary links 138 are substantially coplanar with one another, and the second secondary links 140 are substantially coplanar with one another, the first secondary links 138 are spaced apart from the second secondary links 140 such that each first secondary link 138 faces a corresponding second secondary link 140 to form a pair of secondary links 142.

In this embodiment, each engagement pocket 150 comprises first and second transverse members 144, 146, which are spaced apart from one another and on which the first and second engaging surfaces 152, 154 respectively, are formed. The first and second transverse members 144, 146 extend transversely between the corresponding first and second secondary links forming the pair. The transverse members 144, 146 thus connect the secondary links together. In this embodiment, the first and second transverse members 144, 146 each comprise a roller 148. In other embodiments, each transverse member 144, 146 may comprise a pin.

The space defined between the first and second transverse members of a secondary link forms an engagement pocket 150. The engagement pockets 150 are shaped and positioned to receive and engage with a tooth 12 of the sprocket 10, as shown in the Figures.

In use of the transmission system 100, a tooth 12 of the drive sprocket 10 will mesh to the engagement pocket 150 at a first contact location 160 on the first engagement surface 18 and also at a second contact location 162 on the second engagement surface 20, as shown in Figure 6, for example. Once engaged, the first contact location 160 will engage with the first engaging surface 152 of the engagement pocket 150, and the second contact location 162 will engage with the second engaging surface 154 of the engagement pocket 150.

Due to the inter-relationship between the primary links and secondary links as explained hereinabove together with the transverse members 144, 146 and the features of the drive sprocket 10, during use of the transmission system 100 the first contact location 160 is radially offset from the second contact location 162.

This in turn results in the rollers 148 maintaining contact with the first and second engagement surfaces 18, 20 of each corresponding tooth 12, and each secondary link 130 sitting at an offset angle such that one roller 148 sits radially higher on one side the tooth 12 than the roller 148 on the other side of the tooth.

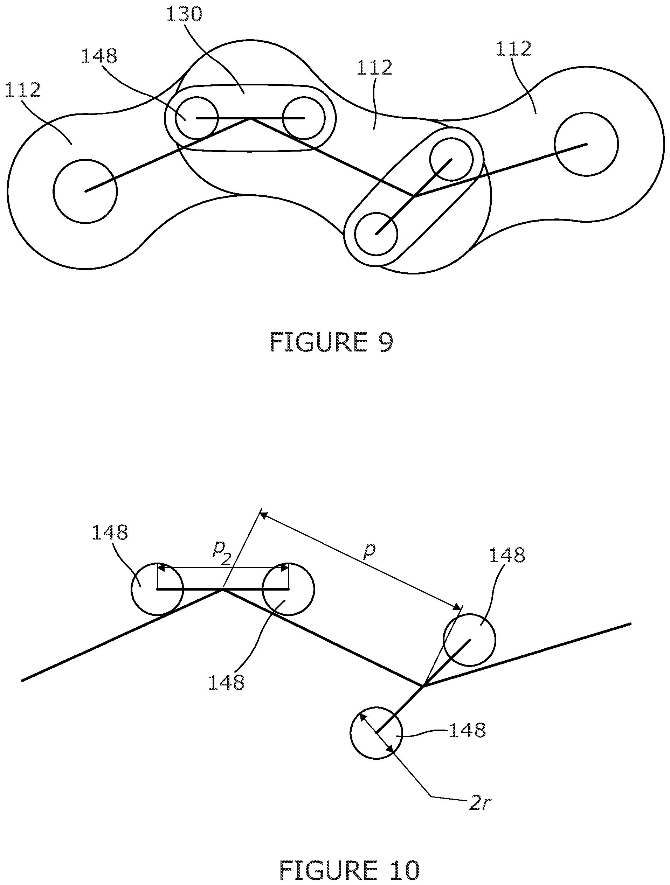

The geometry of the teeth 12 and of the transmission chain 110 will now be described in more detail with particular reference to Figures 9 to 13.

Referring initially to Figures 9 and 10 a portion of the transmission chain 110 is illustrated schematically.

As can be seen, the distance between first and second p pivot points 122, 124 of a primary link 112 is $p$, the distance between the axes of first and second transverse members 144, 146 is $p_2$, and the radius of each roller 148 is r.

Referring now to Figure 11, according to Cartesian coordinates where the origin is at the sprocket centre and the centreline of the tooth is parallel with the y axis:

A symmetrical tooth geometry is proposed with two arcs of radius R with arc centres at $\left(\pm\frac{x}{2}, y\right)$, where, $R$, $x$, & $y$ are defined such that when the chain is articulated around the sprocket and a load is applied to the chain:

    1. the rollers of each secondary link maintain contact with the two arcs of each corresponding tooth, and;

    2. the secondary links sit at an offset angle such that one roller sits higher on one side of the tooth than the roller on the other side of the tooth.

Furthermore, straight lines of length $l$ extend above the tooth from the ends of the arcs towards the centreline at an angle, $\gamma$, relative to the tooth centreline such that as the chain wears, causing the pitch, $p$, of the chain to elongate and the corresponding pitch circle radius, $r_p$, to increase:

    1. contact can be maintained with the tooth by both rollers, and;
    2. the normal contact force acting on the load-bearing upper roller remains parallel to the tensile force in the primary link on the high-tension side of the chain.

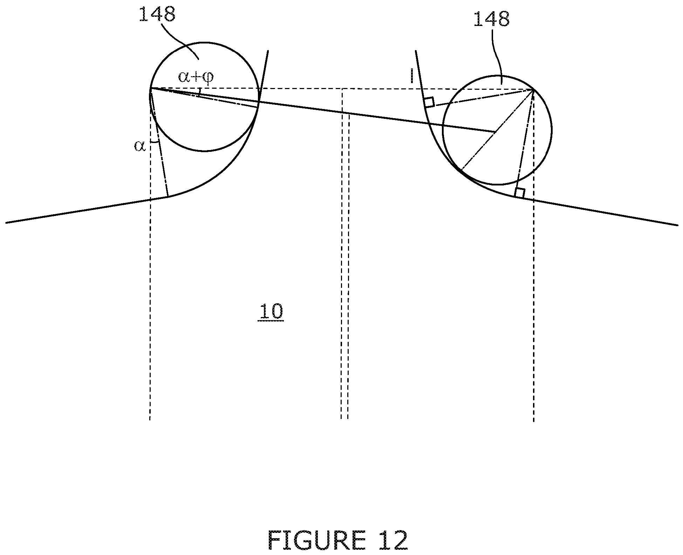

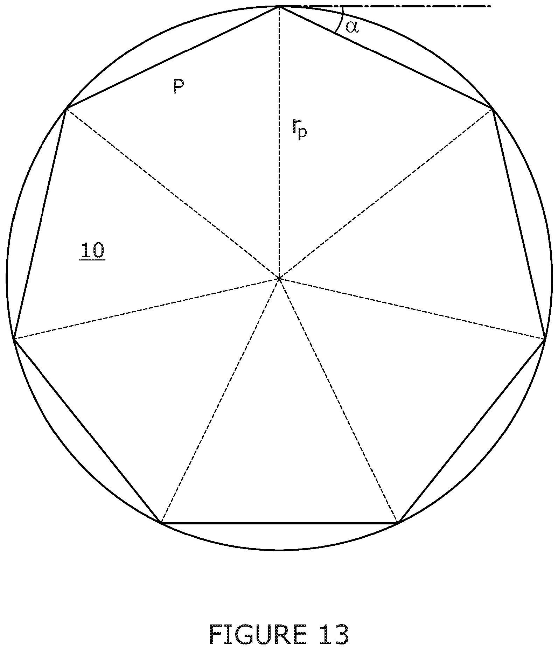

Referring now to Figures 12 and 13, the geometry of the sprocket will be considered in more detail.

Equations 1 & 2 below give $\alpha$, the angle of articulation, and $r_p$, the pitch circle radius, for an n-toothed sprocket of pitch $p$.

$$\alpha = \frac{\pi}{n}$$

$$(1)$$

$$r_p = \frac{p}{2\sin\alpha}$$

$$(2)$$

The values of the arc parameters, $R$, $x$ & $y$ are given by the solutions to the set of simultaneous equations given by Equations 3 to 6, where

$$\gamma = \alpha + \varphi,\, 0 < \delta < \gamma\ \&\ \gamma < \beta < \frac{\pi}{2} - \alpha.$$

$$R = r + \frac{p_2 \sin\delta}{\sin\beta - \sin\gamma} \qquad (3)$$

$$x = (R - r)(\cos\gamma + \cos\beta) + p_2 \cos\delta \qquad (4)$$

$$\varphi = \sin^{-1}\left(\frac{2(R - r)\cos\gamma + p_2 \cos\delta - x}{2r_p}\right) \qquad (5)$$

$$y = r_p \cos\varphi + (R - r)\sin\gamma + \frac{p_2}{2}\sin\delta \qquad (6)$$

Table 1 Example values for R, x & y given p, p2, r, n, $\beta$ & $\delta$

| Chain Geometry | | |
|---|---|---|
| p | 12.7 | mm |
| p2 | 7.5 | mm |
| r | 3 | mm |
| **General Sprocket Geometry** | | |
| n | 19 | |
| $\alpha$ | 0.165 | rad |
| rp | 38.58 | mm |
| **Tooth Geometry Parameters** | | |
| $\beta$ | 0.262 to 1.466 | rad |
| $\delta$ | 0.021 to 0.102 | rad |
| **Tooth Geometry** | | |
| R | 1.68 to 6.62 | mm |
| x | 7.69 to 17.50 | mm |
| $\varphi$ | 0.0002 to 0.0065 | rad |
| y | 60.85 to 61.68 | mm |

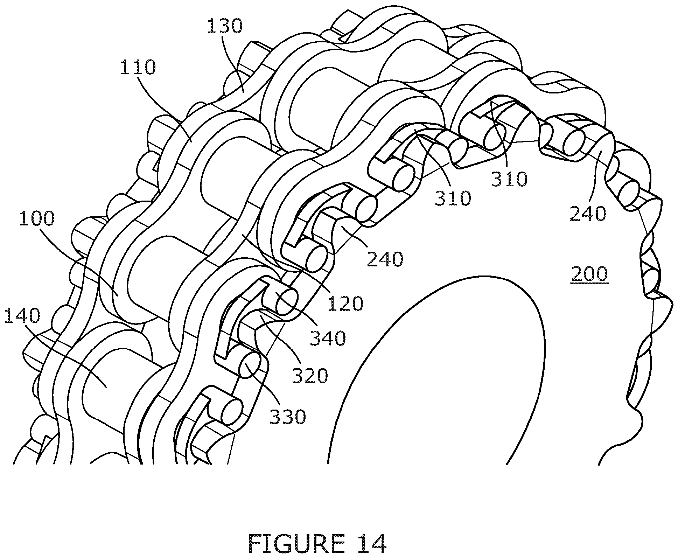

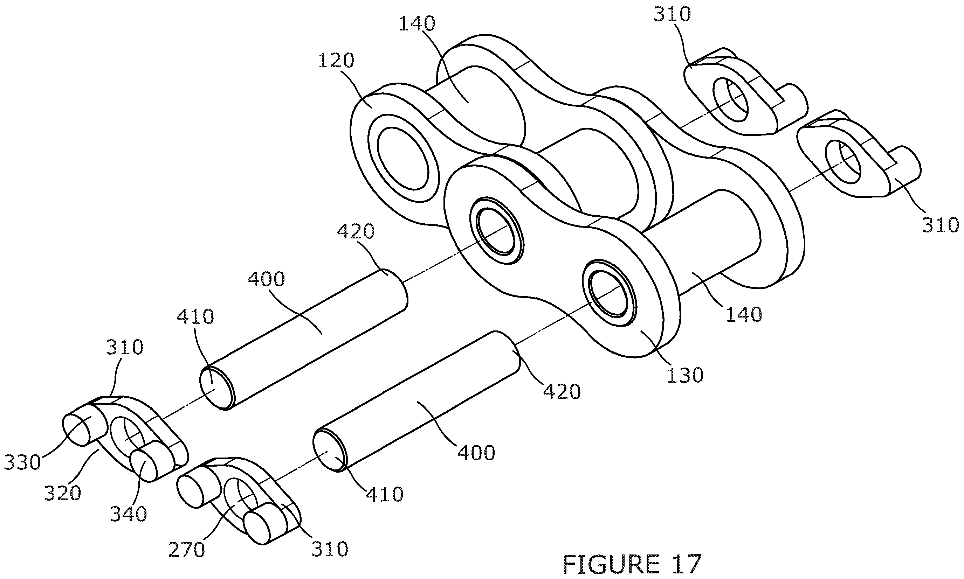

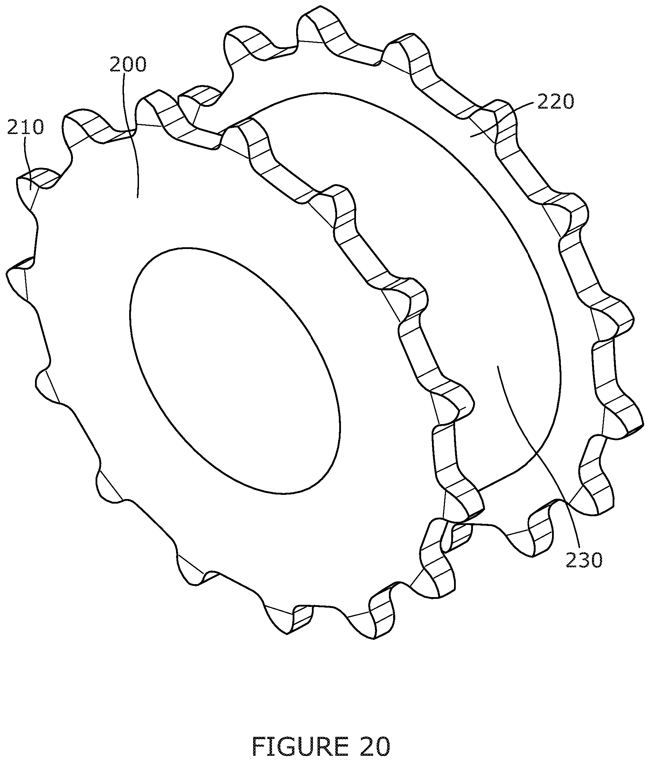

Referring to Figures 14 to 20, and initially to Figure 14, a power transmission drive member according to an embodiment of the invention is designated generally by the reference numeral 100. The drive member 100 is shown articulating around a drive sprocket 200, shown in more detail in Figure 20. As can be seen, particularly from Figure 20, sprocket 200 comprises a first set of teeth 210 and a second set of teeth 220. The sets of teeth 210, 220 are spaced apart from one another by the sprocket body 230. In other embodiments of the invention, the drive sprocket 200 may be replaced by two separate sprockets each having a single set of teeth and spaced apart from one another so that the teeth of both sprockets engage with the drive member.

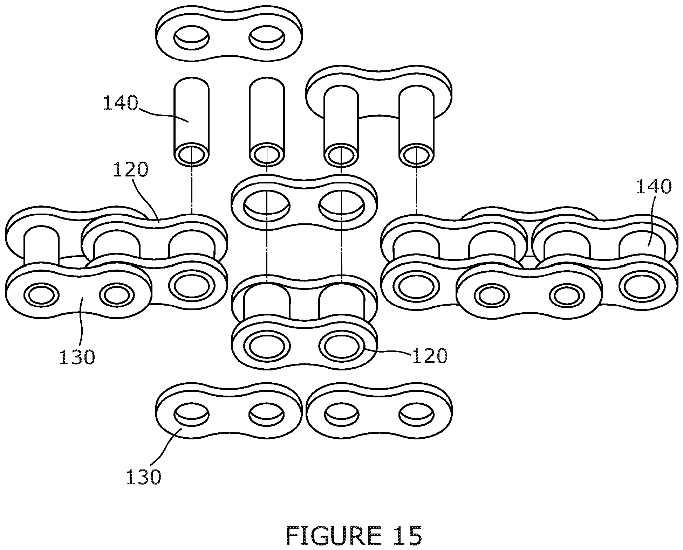

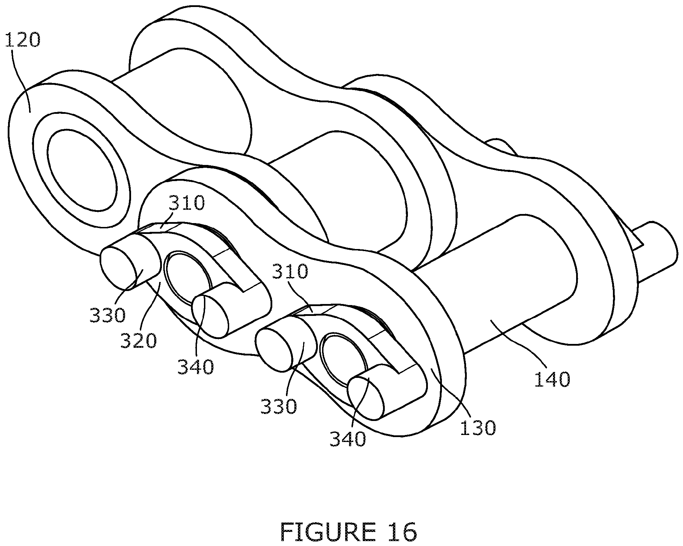

In this embodiment of the invention, the drive member comprises a hollow pin bush chain 110 comprising inner links 120 and outer links 130, the links 120, 130 being connected together by hollow pins 140 as shown particularly in Figures 15 and 16, for example.

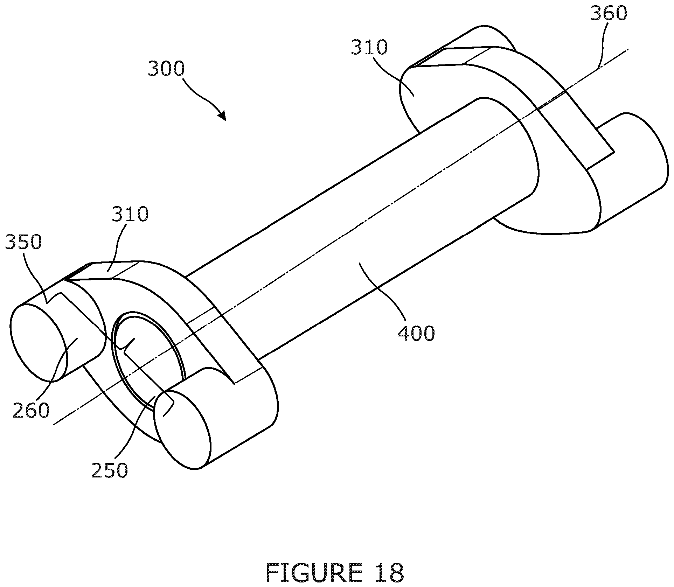

The drive member 100 further comprises engaging mechanisms 300, as shown particularly in Figure 18. In this embodiment of the invention each engaging mechanism comprises two engaging bodies 310. Each of the engaging bodies 310 comprises an engagement pocket 320 adapted to engage with the drive sprocket 200. Each engagement pocket comprises a first engaging surface 330 and a second engaging surface 340 spaced apart from the first engaging surface 330. Together the first and second engaging surfaces 330, 340 form an engaging surface pair 350 which is rotatable about an engaging mechanism rotational axis shown by the dotted line 360 in Figure 18.

When the drive member 100 articulates with the sprocket 200, each tooth 240 of the drive sprocket 200 will engage with an engaging body 310 by contacting both the first engaging surface 330 and the second engaging surface 340 of the engaging body 310. In other words the engaging mechanisms 300 are adapted to engage with each tooth 240 of the sprocket 200 using the principle of dual engagement, whereby contact is made on both sides of each tooth 240 to enable a secure engagement that is energetically efficient and able to distribute the load of the chain over a larger number of teeth of the sprocket 200.

The first and second engaging surfaces 330, 340 are configured such that when driven, a tooth 240 of the sprocket 200 meshes to the engagement pocket 320 of an engaging mechanism 300 at a first contact location 250 on the first engaging surface 330, and also at a second contact location 260 on the second engaging surface 340.

During use, the first contact location 250 is radially offset from the second contact location 260. This helps to prevent the engagement pockets 320 from becoming wedged or stuck on a tooth 240 during use.

In this embodiment of the invention, the first and second engaging surfaces 330, 340 are formed on first and second pins 280, 290 respectively.

The pins 280, 290 may be integrally formed with the remainder of the engagement body 310.

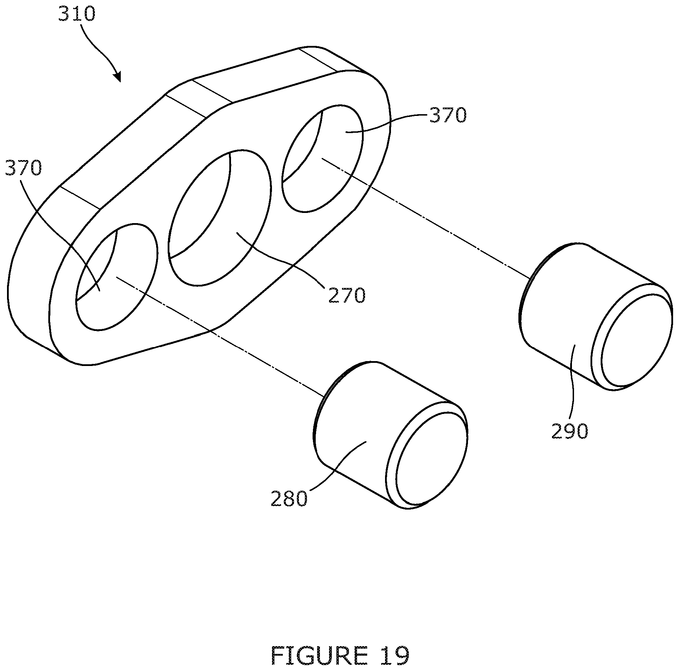

In another embodiment of the invention, the pins 280, 290 may be formed separately from the remainder of the engagement body 310 as shown in Figure 19. In this embodiment, the engaging body 310 comprises pin apertures 370 shaped such that the pins 280, 290 may be press fitted into the pin apertures 370.

In another embodiment of the invention, the pins 280, 290 have a semi-circular cross-section, with the engaging surfaces being formed on the curved portion of the pins 280, 290.

In another embodiment, the first and second engaging surfaces 330, 340 are formed from folded sheet material. Alternatively, the engaging body 310 is shaped to optimise engagement with a sprocket tooth 240.

Each of the engaging bodies 310 comprises an aperture 270, the centre of which is coaxial with the engaging mechanism rotational axis 360.

The engaging mechanisms 300 each further comprise a connecting member 400, having a first end 410 and a second end 420. The connecting member 400 is attachable to a first engaging body 310 at its first end 410 and to a second engaging body 310 at its second end 420, such that it extends coaxially with the rotational axis of the respective engaging mechanism.

In this embodiment of the invention, the first and second ends 410, 420 of the connecting member 400 each fit into an aperture 270 of an engaging body 310 such that both engaging bodies 310 of an engaging mechanism 300 rotate about the rotational axis 360 with the connecting member 400. In other words, the engaging bodies 310 are not able to rotate independently of the connecting member. The aperture 270 thus serves as a receiving portion adapted to receive the connecting member 400.

In some embodiments of the invention, the aperture 270 is profiled. This may aid orientation of the engaging body 310 relative to the connecting member 400.

In this embodiment of the invention, each connecting member 400 extends through a hollow pin 140, thereby connecting the engaging mechanisms 300 to the chain 110, such that a first engaging body 310 is on one side of the chain 110, and the other engaging body 310 is on the other side of the chain. Both of the engaging bodies 310 are thus external to the chain 110, with the engaging surfaces extending away from the chain, and the connecting member 400 extending transversely across the chain. In addition, both engaging bodies 310 rotate about the rotation axis 360.

By means of the invention, therefore, a standard hollow pin bush chain may be readily adapted so that it can engage with either two sprockets, or, as is the case in this embodiment, it can engage with a single sprocket 200 having two sets of teeth 210, 220, whereby the teeth 240 of the sprocket 200 mesh with engagement pockets 320 positioned externally to the chain.

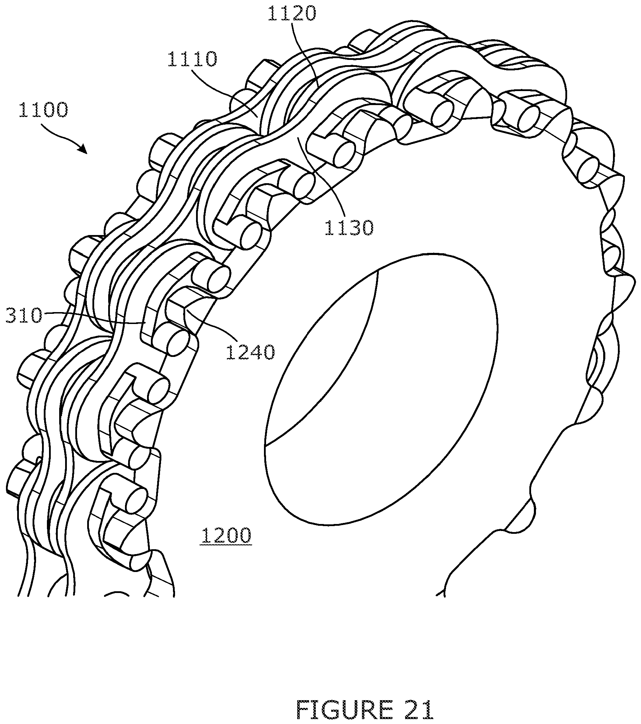

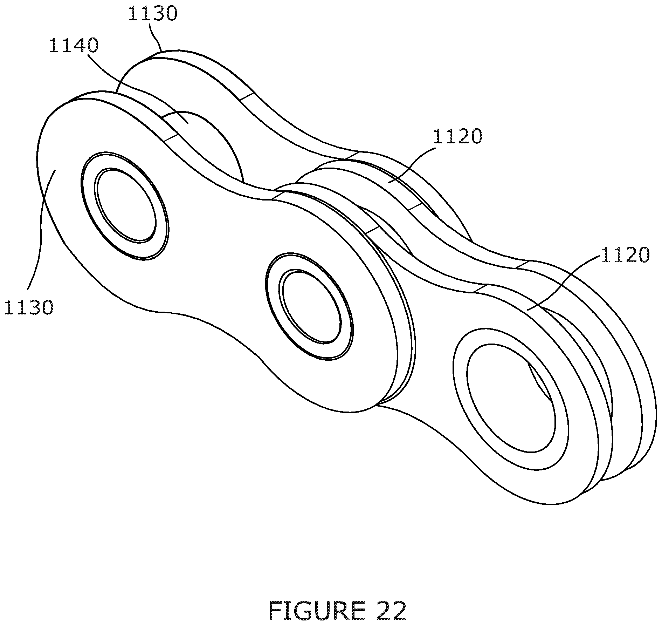

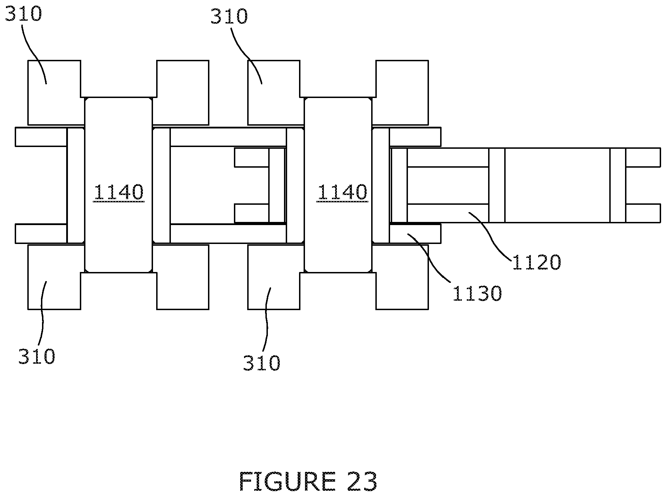

Referring now to Figures 21 to 23, a power transmission drive member 1100 according to another embodiment of the invention is shown articulating around a drive sprocket 1200, having teeth 1240.

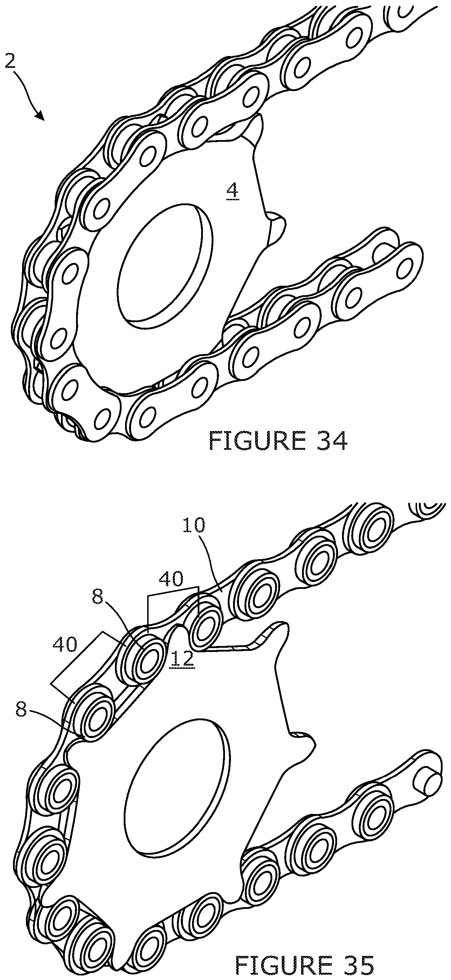

In this embodiment of the invention, the power transmission drive member 1100 comprises a hollow pin chain 1110 which is narrower than a conventional hollow pin chain of the type shown in Figure 34 for example. The chain 1110 comprises inner links 1120, and outer links 1130 which are similar to the links 110 and 120 of the chain 110 of Figure 3, except that the width of the chain 1110 no longer has to be wide enough to accommodate sprocket teeth. This is because the teeth 1240 of sprocket 1200 engage externally of the chain 1110 in the same way as described herein above with respect to the embodiment illustrated in Figures 14 to 20.

Because the width of the chain 1110 is narrower than that of chain 110, the space between the two sets of teeth of sprocket 1200 is correspondingly narrower than the space between the two sets of teeth of sprocket 200.

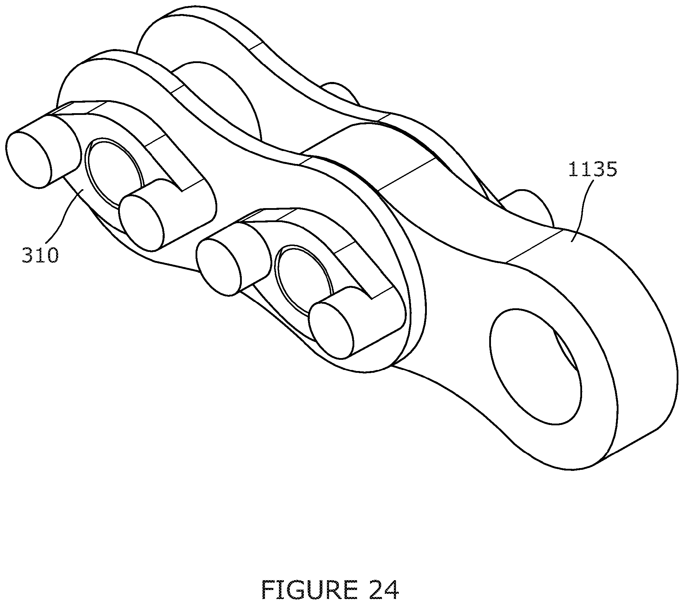

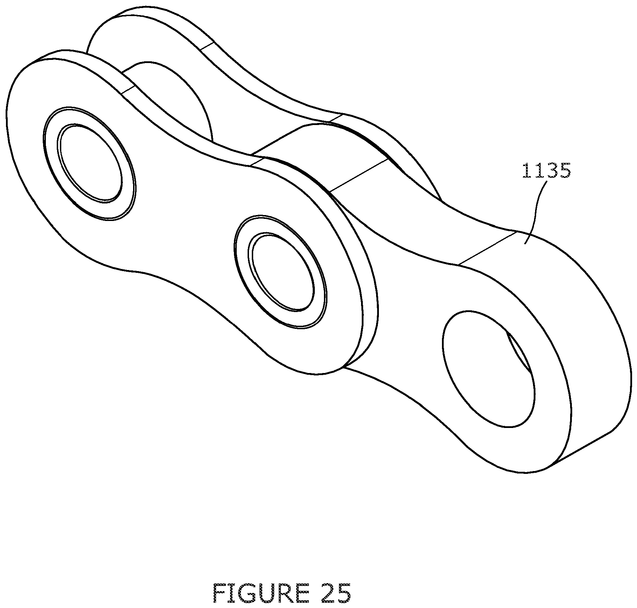

In an alternative embodiment illustrated in Figures 24 and 25, the inner links 1120 are replaced by a single plate 1135, which plate comprises first and second hollow pin receiving portions adapted to receive a hollow pin in a similar manner to the previous embodiments described above.

In all other respects, the power transmission drive member 1100 contains corresponding parts and operates in the same way as power transmission drive member 100.

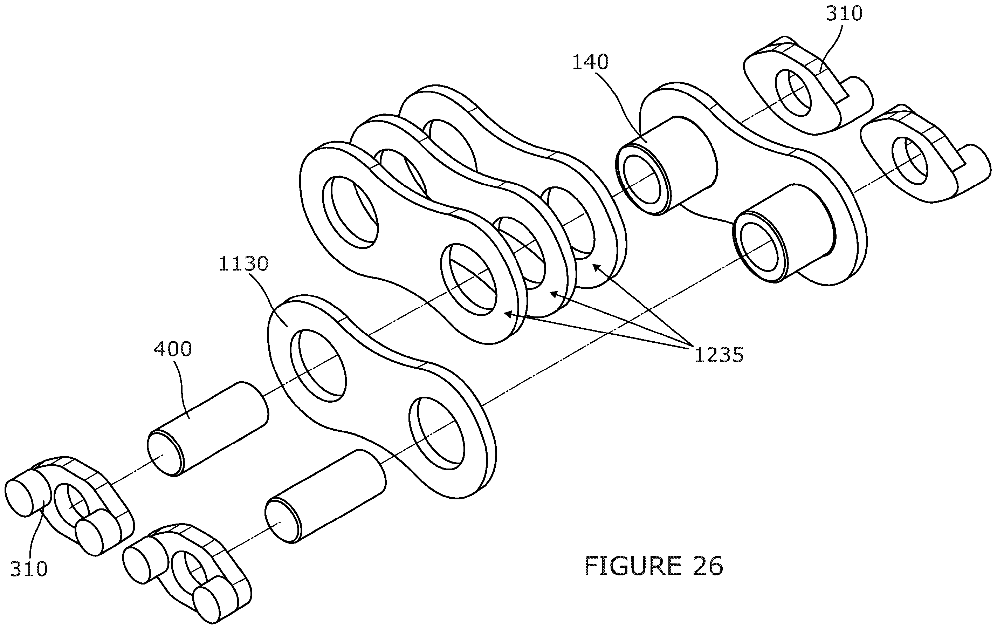

Turning now to Figure 26 a further embodiment of the invention is shown. In this embodiment, the inner link 1135 has been replaced by a plurality of thinner link plates 1235 forming a composite inner link. This can be advantageous from a manufacturing point of view, and also means that by having a plurality of link plates 1235, the thickness of the composite link can be varied according to suit the application.

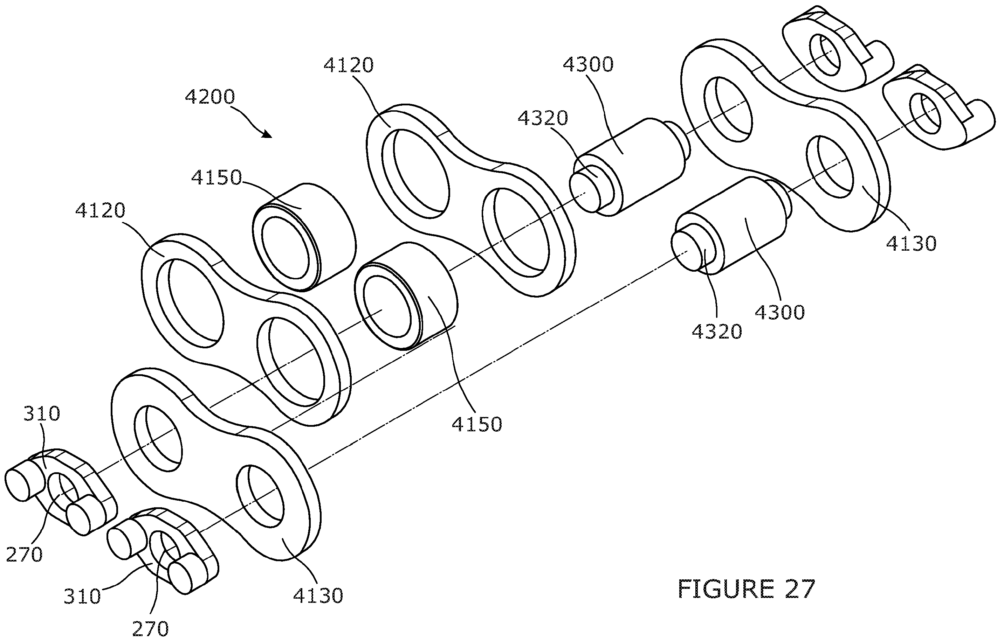

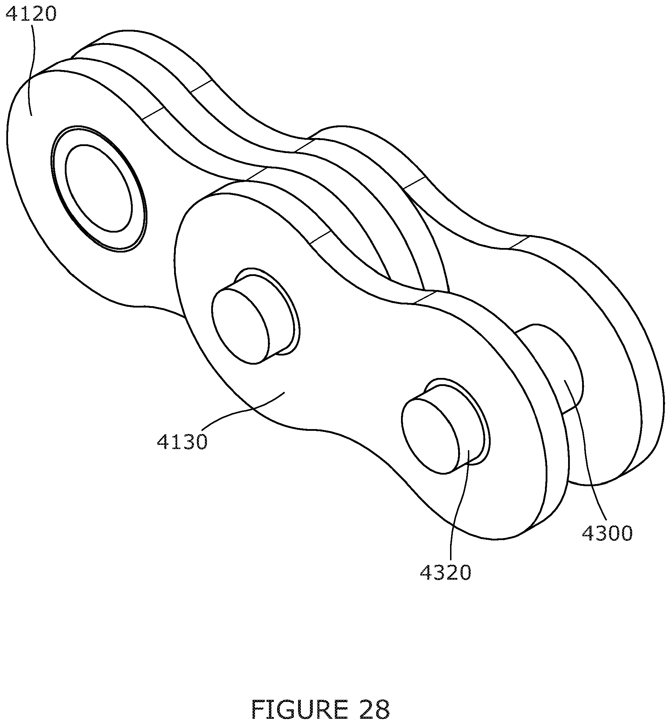

Turning now to Figures 27 and 28, another embodiment of a power transmission drive chain according to an embodiment of the invention is shown.

In this embodiment of the invention, the power transmission drive member comprises a bush chain 4200 comprising solid pins 4300 which extend across the width of the chain 4200.

Each of the pins 4300 has a pin extension 4320 at either end of each pin 4300. Each of the pins 4300 passes through apertures in the outer link plates 4130 and the inner link plates 4120 as well as bushes 4150. The pins are sized and shaped so that there is an interference fit between each pin and a respective outer link plate 4130. Each pin extends between respective engaging bodies 310, and each pin extension 4320 is adapted to pass through the aperture 270 of each engaging body 310. Each pin extension is sized and shaped such that there is a clearance fit between each pin extension 4320 and a respective engaging body 310.

In such embodiments of the invention each engaging body 310 is able to rotate independently about a respective pin extension 4320.

Each pin 4300 may have a head formed at each end thereof in order to prevent each engaging body 310 from becoming detached from a respective pin 4300.

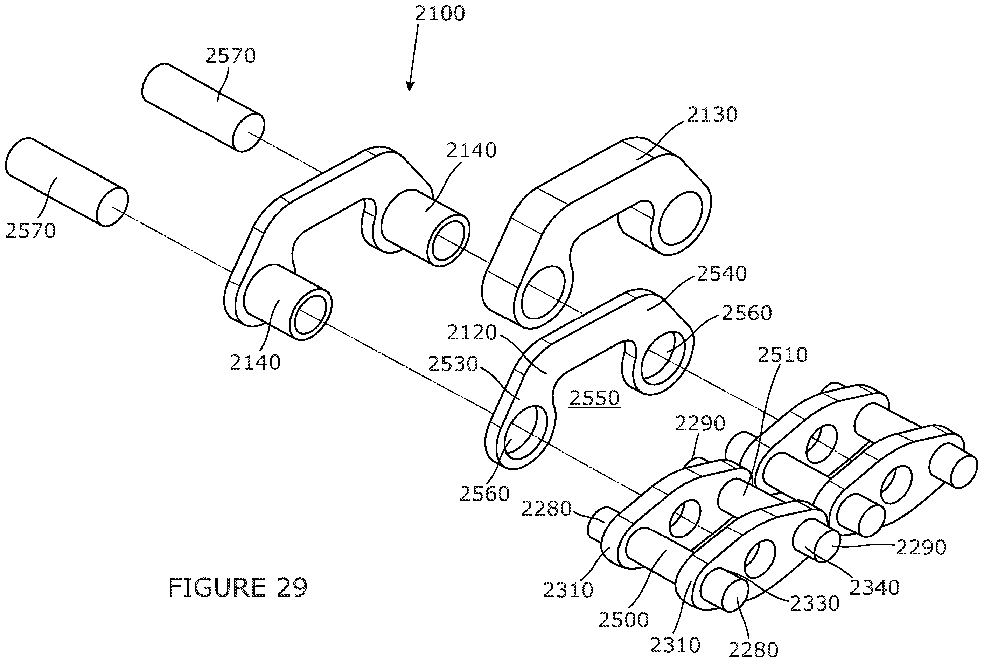

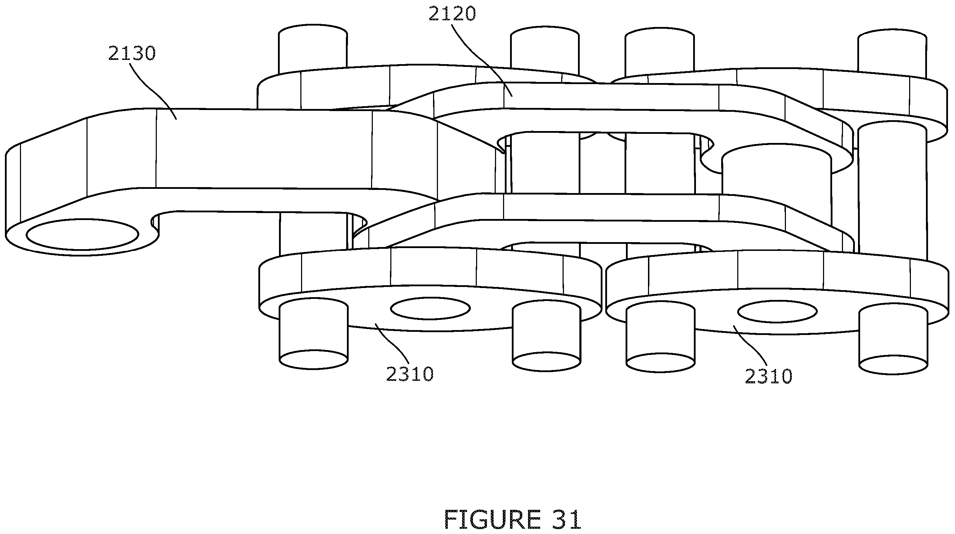

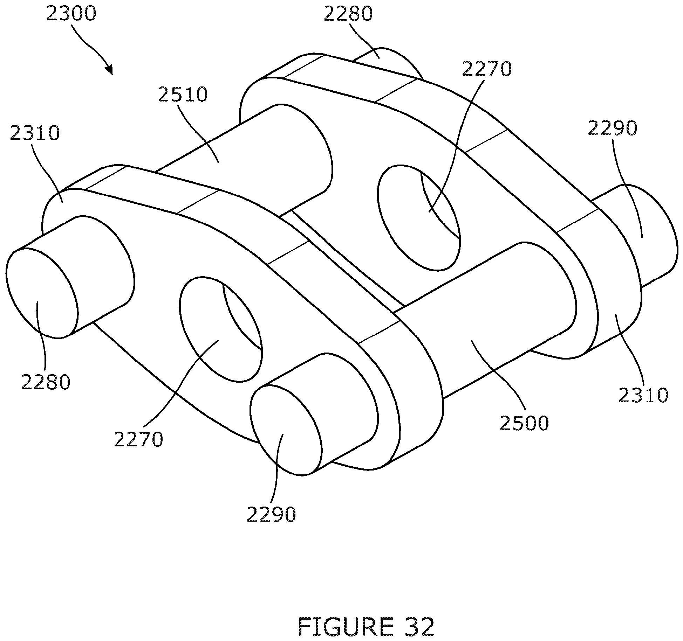

Referring now to Figures 29 to 32 part of a power transmission drive member 2100 according to another embodiment of the invention is shown.

In this embodiment, each engaging mechanism 2300 comprises two engaging bodies 2310 which are spaced apart from one another. Each engaging mechanism further comprises first and second extension members 2500, 2510, which extend through each engaging body and serve to connect two engaging bodies 2310 to one another.

Each extension member 2500, 2510 extends through the engaging bodies 2310 to form pins 2280, 2290 on which the first and second engaging surfaces 2330, 2340 are formed. The first and second engaging surfaces of both engaging bodies 2310 are thus integrally formed.

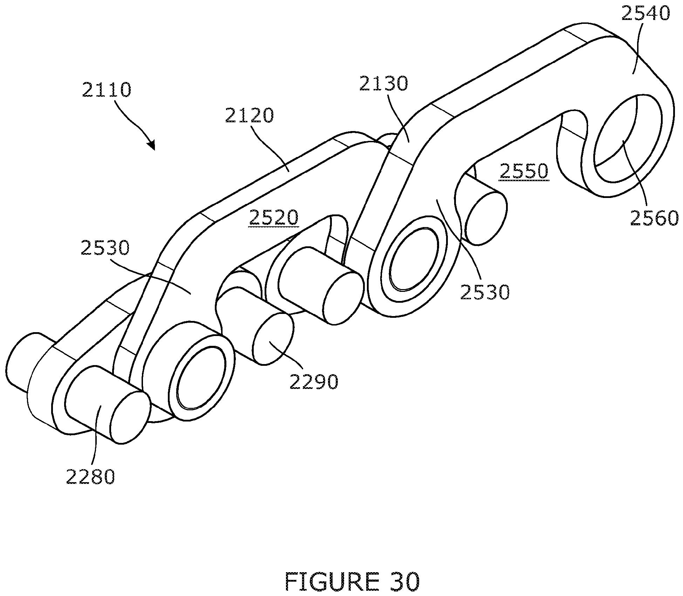

The drive member 2100 comprises a chain 2110, part of which is shown particularly in Figure 30. The chain comprises outer links 2120, and inner links 2130 connected together by a hollow pin 2140.

Each link 2120, 2130 comprises a body portion 2520, and first and second legs 2530, 2540 integrally formed with the body portion 2520, and extend from the body portion 2520 to define a space 2550 between the legs 2530, 2540 and the body portion 2520. Each leg 2530, 2540 comprises a hollow pin receiving portion 2560, and each link 2120, 2130 is positionable on the engaging bodies 2310 such that the hollow pin receiving portion 2560 of a first leg 2530 of a link is coaxial with the rotational axis of a first engaging mechanism, and the hollow pin receiving portion 2560 of the second leg of the link is coaxial with the rotational axis of a second, adjacent engaging mechanism. This means that the hollow pin receiving portions 2560 are coaxial with the apertures 2270 of the engaging bodies 2310.

Each engaging mechanism 2300 further comprises a central pin 2570 which passes through a respective hollow pin 2140.

Each hollow pin 2140 fits through the hollow pin receiving portion 2560 of a respective inner link 2130. The central pin 2570 extends through the hollow pin 2140 and the respective apertures 2270 of both engaging bodies 2310, with the engaging bodies 2310 positioned on either side of the outer link 2120.

This arrangement enables the engaging mechanisms to rotate about their respective rotational axes. The space 2550 provides space for the rotation.

The engaging mechanism 2300 and the engaging bodies 2310 are equivalent to the engaging mechanism 300 and the engaging bodies 310 and function in the same way. In particular, the first and second engaging surfaces 2330, 2340 form an engagement pocket 2320 which is equivalent to engagement pocket 320 and therefore results in dual engagement of the tooth of a sprocket in the pitch pocket as described with reference to the previous embodiment.

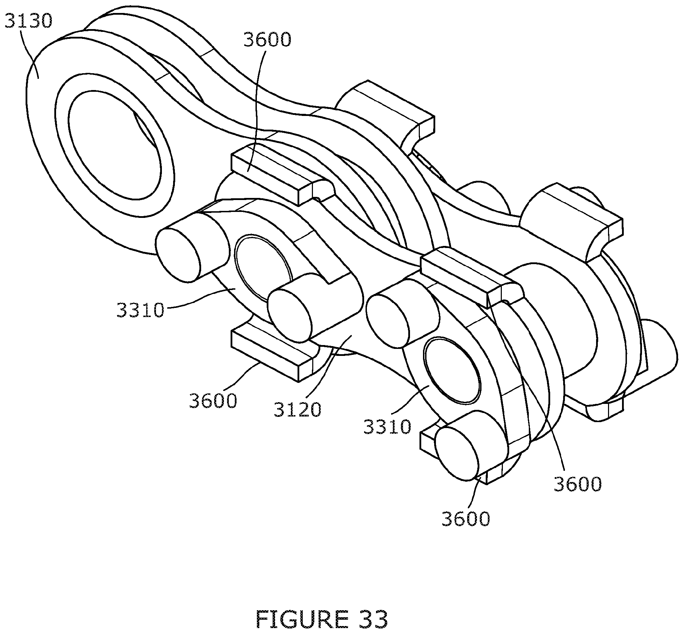

Turning now to Figures 33 a further embodiment of an outer link plate 3120 is shown including angle of rotation limiters. These limiters are designed to prevent over rotation of the engaging bodies during use.

In the embodiment shown in Figure 33, the outer link plate 3120 comprises limiters 3600 formed from bent sections of the outer link plate 3120. The angle limiters 3600 limit the rotational movement of the engaging bodies 3310 and thus reduce the likelihood that the engaging bodies will become stuck.

By means of the present invention, and as described above, each tooth of a drive sprocket will engage with an engaging body by contacting both a first engaging surface and a second engaging surface. This dual engagement reduces the stress on the sprocket as well as relative movement between the chain and sprocket during use thereby reducing wear and tear on the drive member as well as the drive sprocket. In addition, frictional losses are reduced, thereby increasing transmission efficiency.

Referring now to Figures 34 and 35 a transmission system according to an embodiment of the invention is designated generally by the reference numeral 2. The transmission system comprises a sprocket 4 and a drive member comprising a roller chain 6.

In this embodiment of the invention the roller chain 6 is a standard roller chain comprising a plurality of rollers 8 which extend transversely across the transmission member and are spaced apart along the length of the drive member to form the chain. The rollers are connected to one another by links 10 in a known manner. The roller chain 6 is able to articulate between adjacent rollers 8. An engagement pocket 40 is defined between adjacent rollers 8. Each engagement pocket 40 is adapted to engage with a tooth 12 as will be described in more detail below.

By means of the present invention, however, only every other engagement pocket 40 will engage with a tooth during use of the transmission system 2. The remaining every other engagement pockets 40 will effectively engage with the space between adjacent teeth 12.

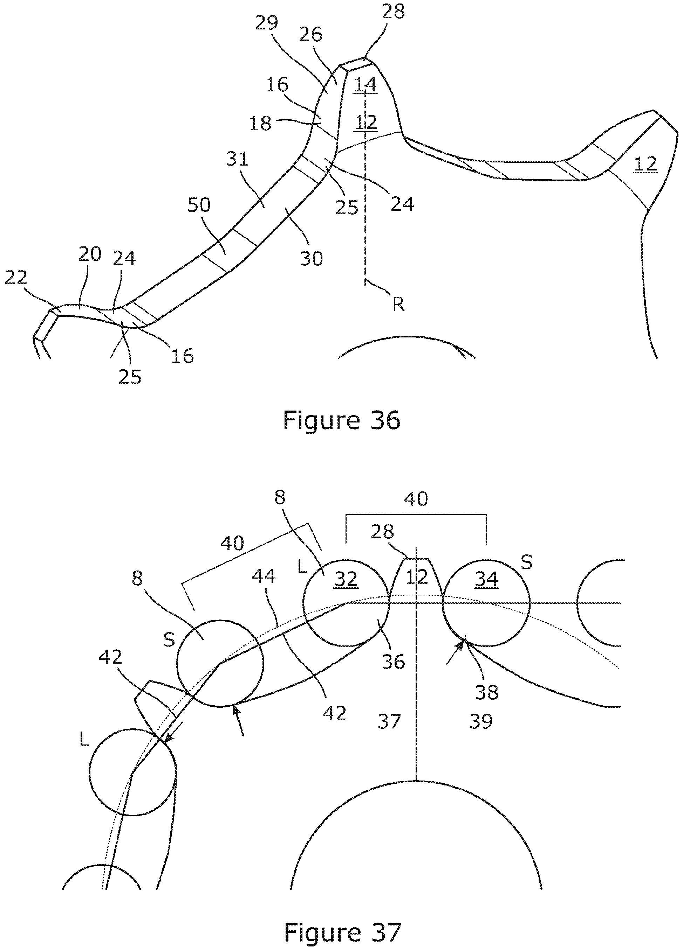

Turning now to Figure 36, the sprocket 4 is shown in more detail.

The sprocket 4 comprises a plurality of teeth 12 which are all shaped substantially identically to one another. Each tooth has a tooth face or profile 14 which is symmetrical about a radial axis R of the sprocket 4.

The tooth profile 14 is defined by a first side 16 comprising a first engagement surface 18, and a second side 20 defining a second engagement surface 22. Each of the first and second sides 16,20 comprises a base portion 24 which forms a roller seating curve 25. Each side further comprises a portion 26 extending from the roller seating curve towards a tip 28 of the tooth. The portion 26 is convex and defines a working curve 29.

The sprocket 4 comprises a further curve 30 forming a supporting curve 31 which extends between adjacent teeth.

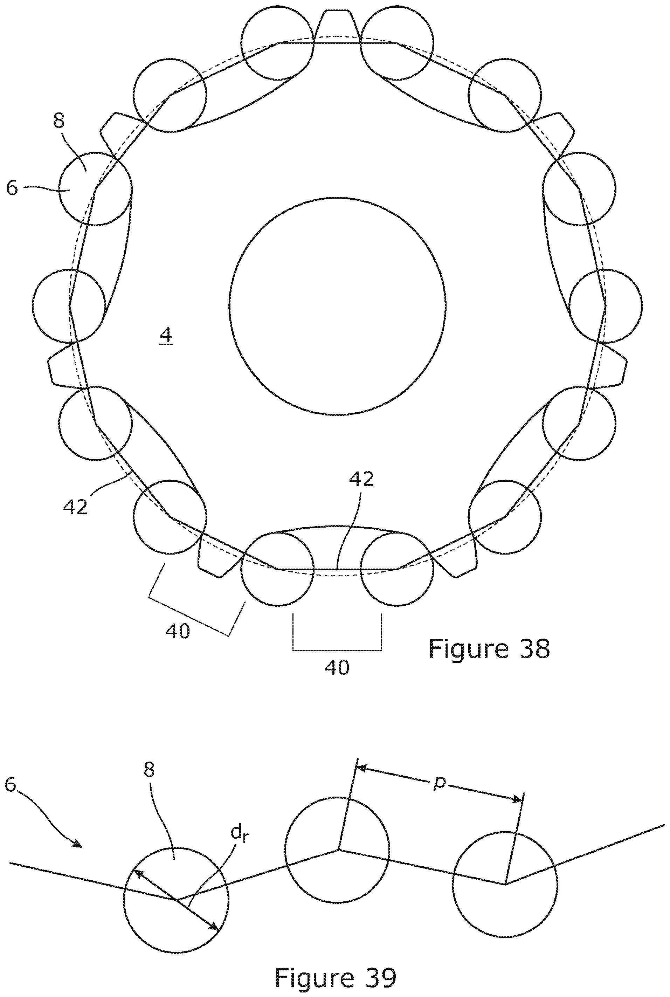

As shown in Figures 37 and 38 particularly, in use of the transmission system 2, every other engagement pocket 40 will engage with a respective tooth 12 whilst the remaining every other engagement pocket 40 will not engage a tooth. This is because, due to the dimensions of the sprocket, and particularly the profile of the tooth, relative to the dimensions of the rollers 8, when the roller chain 6 is engaged with the sprocket 4 there will be two rollers 8 positioned between adjacent teeth. This in turn means that every other engagement pocket 40 will engage with a tooth 12, with every other engagement pocket effectively engaging with spaces between adjacent teeth 12 of the sprocket.

Referring to Figure 37 the manner in which the rollers 8 engage with the sprocket 4 during use of the transmission system 2 is shown schematically.

When considering a pair of rollers 8 positioned on either side of a tooth 12, one roller 32 will be a load bearing roller, and the second roller 8 will be a supporting roller 34.

The roller seating curve 25 provides an initial seating position for the engaged rollers 8 of the roller chain 6. For both load bearing and supporting rollers, this curve helps to distribute the contact load over a larger area reducing material stresses, at least initially when the chain wear is low. The roller seating curve 25 enables rollers to easily transition between supporting and load bearing positions if the drive direction is ever reversed.

The load bearing roller 32 will engage with the tooth 12 on a first engagement surface 36, and the support roller 34 will engage with the tooth at a second engagement surface 38.

The first and second engagement surfaces 36,38 are radially offset from one another. This enables the pair of rollers 8 engaging the tooth 12 to engage with dual engagement, since the roller chain makes contact with the sprocket teeth 12 at two contact points 37, 39 on engagement surfaces 36, 38 in each tooth of the sprocket.

The two contact points 37, 39 are thus on opposing sides of the tooth relative to its radial centreline R, and are radially offset from one another and therefore not symmetric relative to the radial centreline R.

The combination of these features leads to a secure engagement of the drive sprocket tooth by the roller chain 6 and ensures that the rollers 8 do not become wedged on the tooth. In addition, there is little to no relative movement between the tooth and the rollers 8 whilst in contact.

The first contact point 37 is load bearing and transfers the load between the roller chain 6 and the tooth 12. The second contact point 39 is supporting and thus stabilises the roller chain 6 on the sprocket 4 and increases the load distribution over the sprocket teeth 12.

As shown in Figures 36 and 37, each tooth 12 further comprises a working curve 26 that extends from the roller seating curve towards the tip 28 of the tooth.

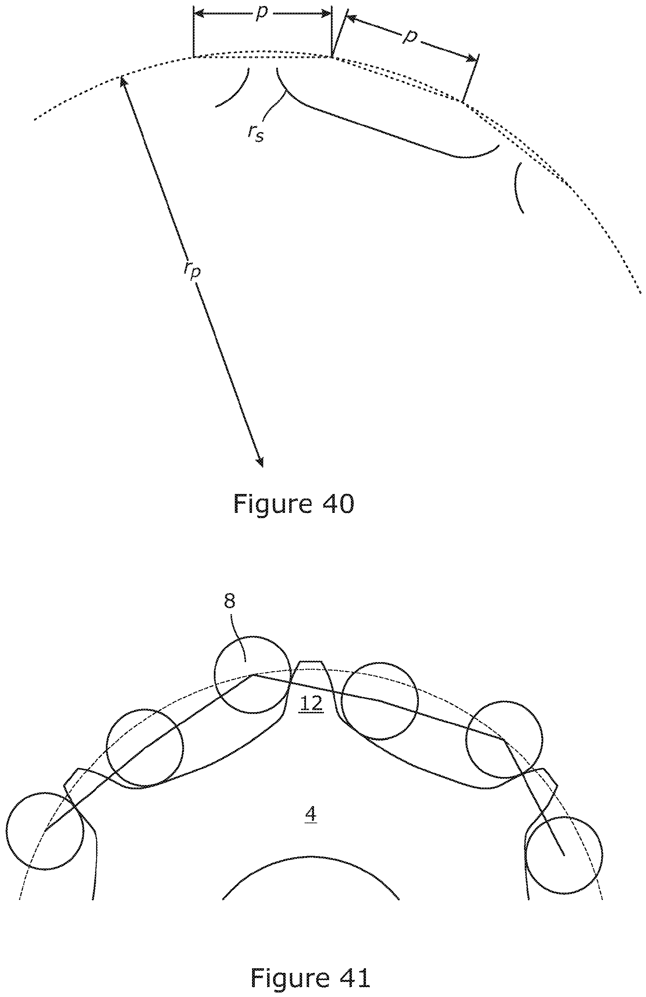

The working curve 26 is convex, and the convex arc forming the working curve 26 curves towards the tooth centreline R. The surface of working curve 26 makes contact with the load bearing roller 32, enabling torque transfer between the roller chain 6 and the sprocket 4. As the chain pitch elongates due to internal wear, this surface also accommodates the climbing of the load-bearing roller as shown in Figure 40.

The tip 28 of each tooth does not need to have a pointed profile. This is because when an engagement pocket 40 is at the point of engagement with the tooth 12 it has a single degree of freedom only which is the articulation of the engagement pocket about the centre of the roller.

The working curve is the primary load bearing contact surface situated on an upper portion of the sides of each tooth. It is this surface that makes contact with the load bearing roller 32, enabling torque transfer between chain and sprocket. As the chain pitch elongates due to internal wear, this surface also accommodates the climbing of the load bearing roller ensuring that the sprocket is able to transfer load through the entire lifetime of the chain.

Turning again to Figure 36, the sprocket further comprises a supporting curve 50 which extends between the roller seating curves of adjacent teeth.

The supporting curve is designed to accommodate the supporting roller 34. The supporting curve may also accommodate some movement of the supporting roller 34 over the lifetime of the roller chain 6, as the worn chain adopts an altered position on the sprocket.

Referring specifically to Figures 37 and 38, the engaging pockets 40 are represented by lines 42.

The line 42 of each engagement pocket sits with endpoints situated on a circle 44 known as the pitch circle. The pitch circle defines the centre point of all the roller seating curves 25.

In this embodiment of the invention the radius of each roller seating curve is slightly larger than the radius of each roller. This results in the engagement pockets 40 sitting marginally off the pitch circle 44. This in turn ensures that the rollers adopt their respective load bearing and supporting positions and prevents the engagement pockets from getting stuck on the teeth.

Referring to Figure 39, the dimensions of the roller chain 6 are shown in more detail.

As can be seen from Figure 39, the distance between adjacent rollers, known as the chain pitch, may be represented by the letter $p$, and the diameter of each roller may be represented by $d_r$.

Referring now to Figure 40, a schematic representation of part of the transmission system 2 of Figure 34 is shown. The circle radius $r_p$ represents the pitch circle. This is the circle which passes through all of vertices of a regular polygon of $n$ sides, for a sprocket 4 which has n/2 teeth. Each side of the regular polygon has a length $\rho$. Figure 40 shows three of the sides of the regular polygon showing the length as $\rho$.

The radius of the arc forming the first face arc and the second face arc may be represented by $r_s$. The centre of a roller seating curve 25 with radius $r_s$ sits at each vertex of the regular polygon forming the bases of the teeth. The radius of the arc may be compared with the radius of the roller and given as a ratio $\rho$. In addition, the steepness of the working curve relative to the centreline of the tooth at the contact point of the load bearing roller 32 may be denoted by $\Theta$. In embodiments of the invention, the ratio $\rho$ was found to be 1.01 regardless of the number of teeth on the sprocket 12.

$\Theta$ was found to vary depending on the number of teeth forming the sprocket.

A representative, but non-exhaustive list of values for $\Theta$ is set out below:

| NUMBER OF TEETH IN THE SPROCKET | THETA (DEGREES) |
|---|---|
| 6 | 0.3 |
| 8 | 2.3 |
| 10 | 2.7 |
| 25 | 5.4 |
| 30 | 4.5 |
| 32 | 4.2 |

Thus, it can be seen that in a transmission system according to an embodiment of the invention, the teeth 12 of the sprocket 4 will have a profile that hardly varies depending on the number of teeth forming the sprocket.

By means of the embodiments of the invention therefore a standard roller chain, for example a roller chain meeting the ISO 606 standard, is able to engage a sprocket such that dual engagement is achieved.

In embodiments of the invention where the sprocket 4 has $n$ teeth, the roller seating arc has a fixed radius $r_s$ for all $n$, and this radius is slightly larger than the radius of each roller 8.

Referring initially to Figures 34 and 35 a transmission system according to an embodiment of the invention is designated generally by the reference numeral 2. The transmission system comprises a sprocket 4 and a drive member comprising a roller chain 6.

In this embodiment of the invention the roller chain 6 is a standard roller chain comprising a plurality of rollers 8 which extend transversely across the transmission member and are spaced apart along the length of the drive member to form the chain. The rollers are connected to one another by links 10 in a known manner. The roller chain 6 is able to articulate between adjacent rollers 8. An engagement pocket 40 is defined between adjacent rollers 8. Each engagement pocket 40 is adapted to engage with a tooth 12 as will be described in more detail below.

By means of the present invention, however, only every other engagement pocket 40 will engage with a tooth during use of the transmission system 2. The remaining every other engagement pockets 40 will effectively engage with the space between adjacent teeth 12.

Turning now to Figure 36, the sprocket 4 is shown in more detail.

The sprocket 4 comprises a plurality of teeth 12 which are all shaped substantially identically to one another. Each tooth has a tooth face or profile 14 which is symmetrical about a radial axis R of the sprocket 4.

The tooth profile 14 is defined by a first side 16 comprising a first engagement surface 18, and a second side 20 defining a second engagement surface 22. Each of the first and second sides 16,20 comprises a base portion 24 which forms a roller seating curve 25. Each side further comprises a portion 26 extending from the roller seating curve towards a tip 28 of the tooth. The portion 26 is convex and defines a working curve 29.

The sprocket 4 comprises a further curve 30 forming a supporting curve 31 which extends between adjacent teeth.

As shown in Figure 37 particularly, in use of the transmission system 2, every other engagement pocket 40 will engage with a respective tooth 12 whilst the remaining every other engagement pocket 40 will not engage a tooth. This is because, due to the dimensions of the sprocket, and particularly the profile of the tooth, relative to the dimensions of the rollers 8, when the roller chain 6 is engaged with the sprocket 4 there will be two rollers 8 positioned between adjacent teeth. This in turn means that every other engagement pocket 40 will engage with a tooth 12, with every other engagement pocket effectively engaging with spaces between adjacent teeth 12 of the sprocket.

Referring to Figure 37 the manner in which the rollers 8 engage with the sprocket 4 during use of the transmission system 2 is shown schematically.

When considering a pair of rollers 8 positioned on either side of a tooth 12, one roller 32 will be a load bearing roller, and the second roller 8 will be a supporting roller 34.

The roller seating curve 25 provides an initial seating position for the engaged rollers 8 of the roller chain 6. For both load bearing and supporting rollers, this curve helps to distribute the contact load over a larger area reducing material stresses, at least initially when the chain wear is low. The roller seating curve 25 enables rollers to easily transition between supporting and load bearing positions if the drive direction is ever reversed.

The load bearing roller 32 will engage with the tooth 12 on a first engagement surface 36, and the support roller 34 will engage with the tooth at a second engagement surface 38.

The first and second engagement surfaces 36,38 are radially offset from one another. This enables the pair of rollers 8 engaging the tooth 12 to engage with dual engagement, since the roller chain makes contact with the sprocket teeth 12 at two contact points 37, 39 on engagement surfaces 36, 38 in each tooth of the sprocket.

The two contact points 37, 39 are thus on opposing sides of the tooth relative to its radial centreline R, and are radially offset from one another and therefore not symmetric relative to the radial centreline R.

The combination of these features leads to a secure engagement of the drive sprocket tooth by the roller chain 6 and ensures that the rollers 8 do not become wedged on the tooth. In addition, there is little to no relative movement between the tooth and the rollers 8 whilst in contact.

The first contact point 37 is load bearing and transfers the load between the roller chain 6 and the tooth 12. The second contact point 39 is supporting and thus stabilises the roller chain 6 on the sprocket 4 and increases the load distribution over the sprocket teeth 12.

As shown in Figure 37, each tooth 12 further comprises a working curve 26 that extends from the roller seating curve towards the tip 28 of the tooth.

The working curve 26 is convex, and the convex arc forming the working curve 26 curves towards the tooth centreline R. The surface of working curve 26 makes contact with the load bearing roller 32, enabling torque transfer between the roller chain 6 and the sprocket 4. As the chain pitch elongates due to internal wear, this surface also accommodates the climbing of the load-bearing roller.

Turning again to Figure 36, the sprocket further comprises a supporting curve 50 which extends between the roller seating curves of adjacent teeth.

As mentioned above, the rollers 8 of the roller chain 6 are able to articulate relative to one another via the links connecting adjacent rollers to one another.

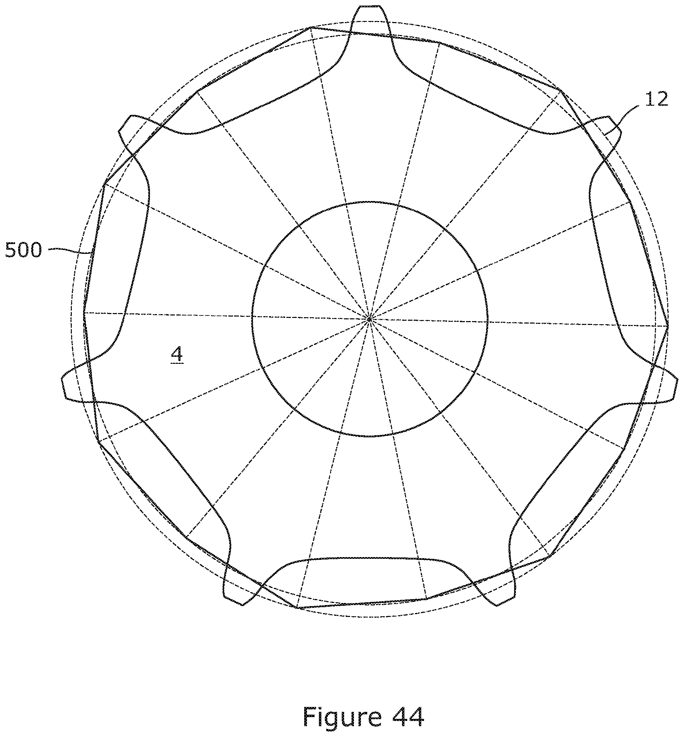

In Figure 44 two articulations angles are shown, $a_1$ and $a_2$ and these will now be explained further.

First roller 32 and second roller 34 are shown forming a first engagement pocket 401 which meshes with a first tooth 112. A third roller 322 is in contact with a second tooth 212 and is positioned to one side of the first roller 32. The third roller 322 and the first roller 32 together form a second engagement pocket 402.

A fourth roller 422 is positioned adjacent to second roller 34 and is in contact with a third tooth 312. The second and fourth rollers 34, 422 together form a third engagement pocket 403.

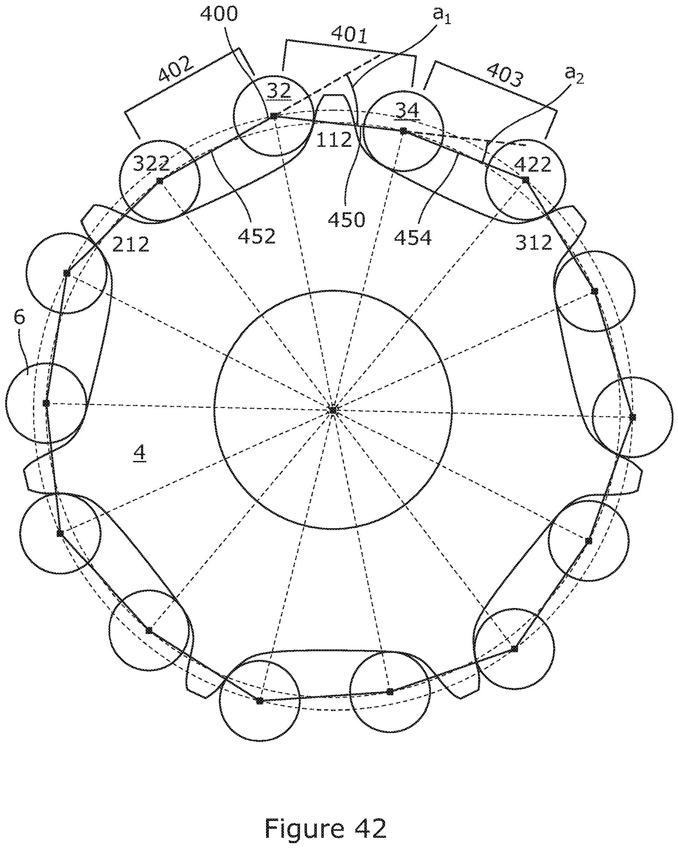

In this embodiment of the invention, the first roller 32 is a load bearing roller, and the second roller 34 is a support roller. Every other roller starting with the load bearing roller 32 will also be a load bearing roller. With reference to Figure 42 therefore, the fourth roller 422 is also a load bearing roller. This pattern will repeat itself around the sprocket 4.

At the point that first roller 32 makes contact with first tooth 112, and third roller 322 is also in contact with a second tooth 212, first roller 32 and third roller 322 are positioned on their respective engagement surfaces, and the second roller 34 is in position, a first articulation angle $a_1$ is formed at an articulation point 400, which in this embodiment coincides with the axis of the first roller 32.

Considering now the second roller 34 and fourth roller 422, the second articulation angle $a_2$ is formed at the second roller 34 when the second roller 34 and the fourth roller 422 are in contact with a respective tooth 12, and the first roller 322 is in contact with tooth 112.

The magnitude of the first articulation angle $a_1$ at the point defined above, is in this example greater than the second articulation angle $a_2$ at the point defined above.

Similarly, every other roller starting with the second roller 34 is a support roller. In this embodiment therefore the third roller 322 is also a support roller and this pattern will repeat itself around the sprocket 4.

In this embodiment, every other articulation angle will be the same. This means that the articulation angle $a_1$ will be at every load bearing roller, and the articulation angle $a_2$ will be at every support roller.

Adjacent rollers are connected to one another by a link which provides a rigid connection between adjacent rollers.

In this embodiment, first roller 32 is connected to second roller 34 by link 450. Third roller 322 is connected to first roller 32 by link 452, and second roller 34 is connected to fourth roller 422 by link 454.

It is the links 450, 452, 454 which articulate relative to one another as shown by the articulation angles.

Because the articulation angle at each load bearing roller 32, 422 is larger in this embodiment that the articulation angle $a_2$ at every support roller 34, 322, each load bearing roller 332 will articulate for a longer duration than is the case with each support roller 34. This can improve the efficiency of the transmission system.

By means of the present invention therefore it is possible to achieve selective articulation by setting the articulation angle at each tooth to be different, or to follow a regular pattern as is the case in this embodiment.

This is desirable from the perspective of both power transmission efficiency and chain wear. Articulation under load causes inevitable friction between adjacent chain links. This leads to both energy loss and component wear. The size of these losses is roughly proportional to the size of the articulation angle.

The losses associated with each articulation alternates with the alternating inner and outer chain links of a standard power transmission roller chain. The articulation of the outer link is more efficient than the inner, while the articulation of the inner link leads to less chain elongation than the outer. By using selective articulation, the magnitude of the beneficial or deleterious effects of a given articulation can be manipulated to improve the drive trains overall performance.

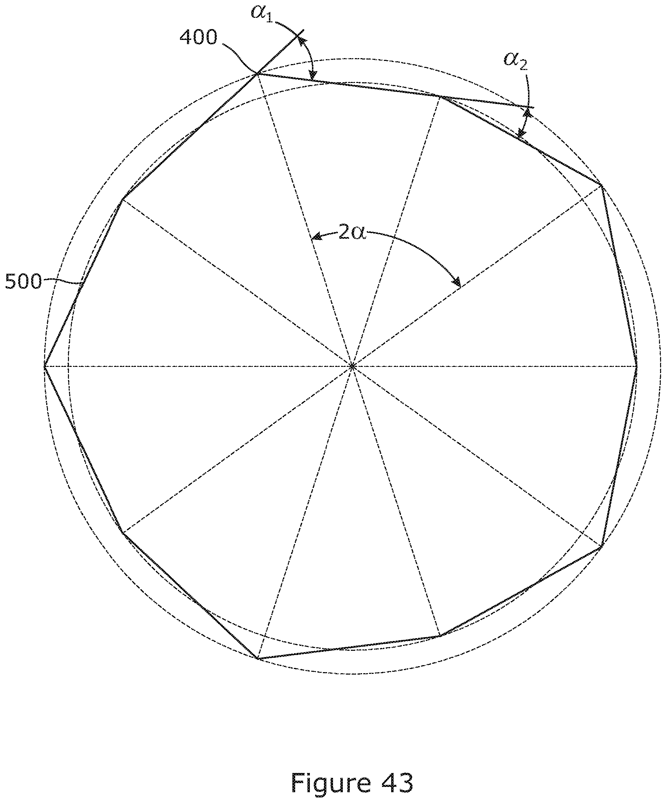

As shown particularly in Figures 43 and 44, the articulation points 400 in a transmission system according to embodiments of the invention define a n sided irregular polygon 500.

In embodiments of the invention where the first articulation angle is $a_1$ and the second is $a_2$, the pattern is repeated for every pair of links around the sprocket circumference.

Thus, the relationship between these new articulation angles and the original exterior, angle of a polygon of n sides, a is, $a_1 + a_2 = 2a$ as shown in Figure 43.

To achieve this n sided irregular polygon, a sprocket of n/2 teeth is used, where a tooth sits between the vertices of every other side of the polygon. This is shown more clearly in Figure 44.

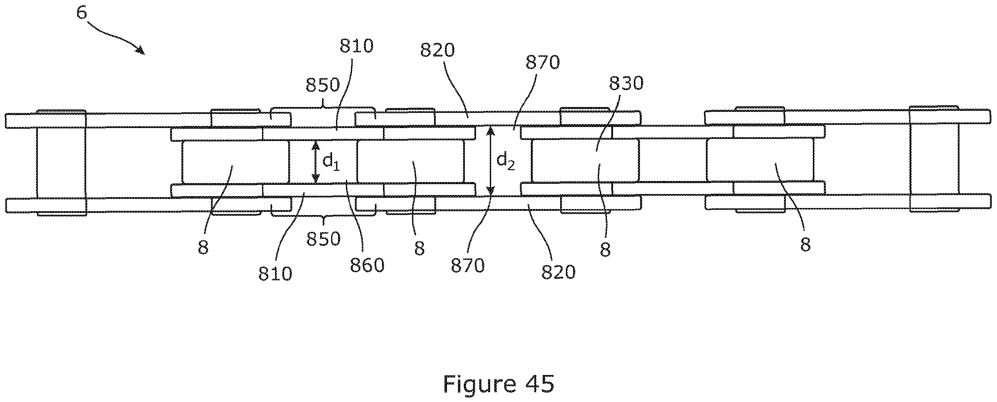

Turning now to Figures 45 to 47, a sprocket 904 according to another embodiment of the invention is illustrated schematically. The sprocket 904 forms part of a transmission system 1002 comprising the sprocket 904 and a roller chain 6.

Parts of the transmission system 1002 that are equivalent to the transmission system 2 described above will be given corresponding reference numerals for ease of reference.

As shown particularly in Figure 45, the roller chain 6 comprises a plurality of rollers 8. The rollers 8 are connected to adjacent rollers by means of inner links 810 and outer links 820.

The inner links 810 serve to connect two rollers 8 together to form a roller pair 850. The outer links serve to connect roller pairs 850 together to form the roller chain 6. The distance between inner surfaces 860 of inner links 810 is indicated by the reference numeral $d_1$ in Figure 45. The distance between inner surfaces 870 of facing outer links 820 is indicated by the reference numeral $d_2$. As shown in Figure 45, $d_2$ is greater than $d_1$.

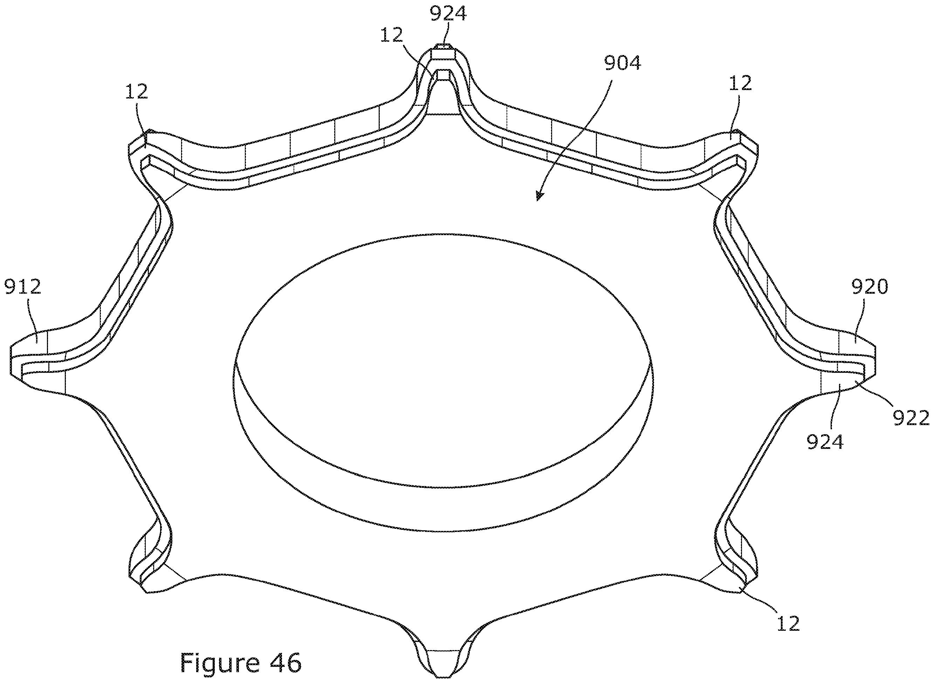

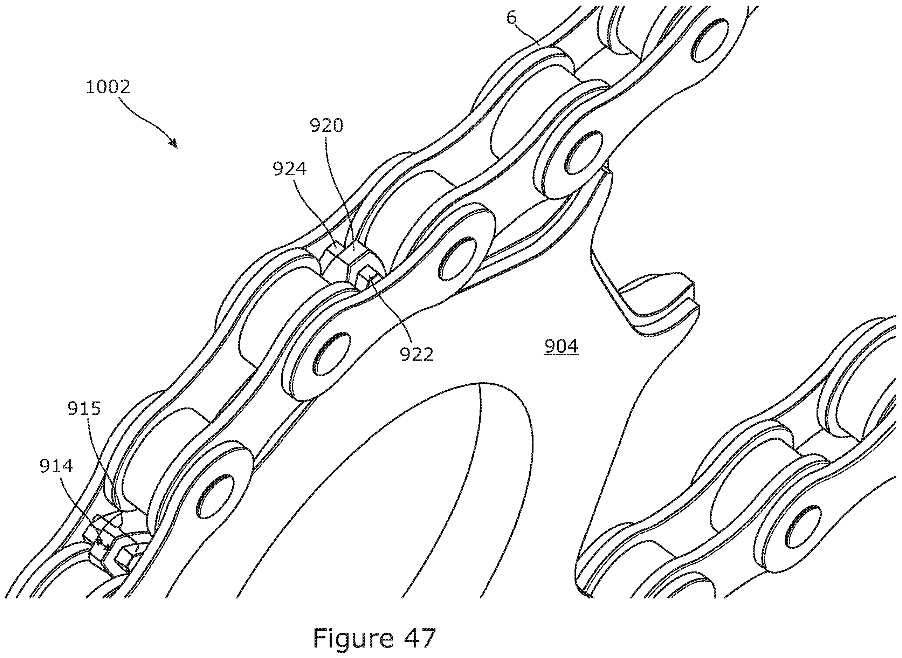

Turning now to Figures 46 and 47, the sprocket 904 is described in more detail.

The sprocket comprises a plurality of teeth 12 spaced apart around the sprocket. Each tooth has a first width 914 that is equal to or slightly less than the distance between inner surfaces of facing inner links 800 ($d_1$).

Each tooth 12 also has a second width 915 which is equal to or slightly less than the distance between the inner surfaces 870 of outer links 820 ($d_2$).

In this embodiment of the invention each tooth comprises a middle tooth portion 920 and outer tooth portions 922, 924 which together define the second width.

When the sprocket 904 engages with the roller chain 6, the teeth will be positioned between two outer links as shown in Figure 47. The width of the outer tooth portions 922, 924 together with the width of the middle portion 920 results in an overall tooth width that is the same as or slightly less than the distance ($d_2$) between inner surfaces of facing outer links, and greater than the distance ($d_1$) between the inner surfaces of facing inner links. This means that the fit between the tooth 12 and the chain 6 is such that there is little clearance between the tooth and the chain. Furthermore, the presence of the outer tooth portions 922, 924 prevents the teeth from engaging between inner links, and thus the alignment of the chain is substantially maintained during use of the drive transmission system.

In addition, the presence of the middle portion 920 prevents the inner links from interfering with the tooth during use.

**Claims**

1.    A drive sprocket (10) comprising a plurality of teeth (12) for meshing with a drive member (110) to transmit rotary motion, the drive member including a plurality of engagement pockets (150) engaging the teeth of the drive sprocket, wherein the teeth are formed integrally with the drive sprocket and each tooth of the plurality of teeth has a tooth profile defined by a first side (16) comprising a first engagement surface (18) and an opposite second side (20) comprising a second engagement surface (22), and **characterized in that**, said engagement surfaces are configured such that when driven, a tooth meshes to one of the engagement pockets at a first contact location (160) on the first engagement surface and also at a second contact location (162) on the second engagement surface, wherein the first contact location is radially offset from the second contact location.

2.    A drive sprocket as claimed in claim 1, wherein each tooth (12) has a front face (24) and a back face (26), the shape of which faces being defined by the first and second sides (16, 20), wherein the shape of each face is symmetrical about a radial axis of the tooth, and the sides of the faces are defined at least partially by two arcs.

3.    A drive sprocket as claimed in claim 1 or claim 2, wherein adjacent teeth (12) are spaced apart from one another to define a connecting portion (30) of the sprocket (10).

4.    A drive sprocket as claimed in claim 1, wherein each tooth (12) has a front face (24) and a back face (26), the shape of which faces being defined by the first and second sides (16, 20) such that the shape of each face is symmetrical about a radial axis of the tooth, and the first side of each face is defined at least partially by a first face arc, and the second side of each face is defined at least partially by a second face arc, wherein the distance between the centre of the first face arc and the centre of the second face arc of each tooth is substantially the same as the distance between the centre of the first face arc of a first tooth and the centre of the second face arc of an adjacent tooth.

5.    A drive sprocket as claimed in claim 4 wherein the first face arc of each tooth (12) comprises a base portion of the first side (16) of the said tooth, and the second face arc of each tooth forms a base portion of the second side (20) of the respective tooth, wherein the first and second face arcs each comprise a roller seating curve.

6.    A drive sprocket as claimed in claim 4 or claim 5 wherein each first and second side (16, 20) comprises a second portion comprising a convex arc extending from a respective roller seating curve towards a tip portion of a respective tooth (12).

7.    A drive sprocket as claimed in any one of the claims 4 to 6 further comprising a supporting curve extending from the roller seating curve of a first tooth towards the roller seating curve of an adjacent tooth (12).

8.    A transmission system comprising a drive sprocket (10) as claimed in any one of claims 4 to 7 and a drive member (110) adapted to mesh with the drive sprocket.

9.    A transmission system as claimed in claim 8 wherein the drive member (110) comprises a comprises a roller chain and adjacent rollers forming the roller chain define a plurality of engagement pockets (150), each of which engagement pockets comprising a first engaging surface (152) and a second engaging surface (154) spaced apart from the first engaging surface; preferably, the roller chain has a pitch p, and the distance between the centre of the first face arc and the centre of the second face arc of each tooth, and the distance between the centre of the first face arc of a first tooth and the centre of the second face arc of an adjacent tooth is substantially equal to p.

10. A transmission system comprising a drive sprocket as claimed in claim 1 and a drive member adapted to mesh with the drive sprocket (10),

   wherein the drive member comprises a roller chain comprising a plurality of spaced apart rollers (32, 34, 322, 422), each roller being spaced apart from adjacent rollers by a predetermined distance, and connected to an adjacent roller by a rigid connecting member (450, 452, 454) extending between two adjacent rollers whereby the engagement pockets are defined between adjacent rollers,
   wherein, a first engagement pocket (401) is formed by first and second rollers (32, 34) which are adjacent to one another, a second engagement pocket (402) is formed by the first roller (32) and a third roller (322), and a third engagement pocket (403) is formed by the second roller (34) and a fourth roller (422), the third roller being adjacent to the first roller, and the fourth roller being adjacent to the second roller,
   and wherein an angle formed between a connecting member connecting the first and second rollers, and a connecting member connecting the first and third rollers, comprises a first articulation angle, and an angle formed between the connecting member connecting the first and second rollers, and a connecting member connecting the second and fourth rollers comprises a second articulation angle,
   wherein, the magnitude of the first articulation angle formed when the first second and third rollers are all in contact with a tooth is different to the magnitude of the second articulation angle formed when the first second and fourth rollers are all in contact with a tooth.

11. A transmission system according to Claim 10 wherein the drive member (110) comprises a plurality of articulation points, and the articulation angles are defined at articulation points.

12. A transmission system according to Claim 10 or Claim 11 wherein the first roller comprises a load bearing roller and the second roller comprises a supporting roller.

13. A transmission system according to any one of claims 10 to 12 wherein the magnitude of the first articulation angle is greater than the magnitude of second articulation angle.

14. A transmission system according to any one of claims 10 to 13 wherein magnitude of every other articulation angle is substantially the same.

15. A transmission system according to any one of claims 10 to 14 wherein the roller chain comprises a plurality of inner links (120), each of which serves to connect two rollers to form a roller pair, and a plurality of outer links (130), each of which serves to connect roller pairs to one another to form the roller chain, such that a space is defined between inner surfaces of facing inner links, and also between inner surfaces of facing outer links wherein each tooth (12) of the sprocket tooth has a width which is the same as, or slightly less than the distance between inner surfaces of facing outer links, and greater than the distance between inner surfaces of facing inner links; and, optionally, each tooth of the sprocket comprises a first width which is the same as or slightly less than the distance between inner surfaces of facing inner links, and a second width that is the same as or slightly less than the distance between the inner surfaces of facing outer links.

**Patentansprüche**

1. Antriebskettenrad (10) mit einer Vielzahl von Zähnen (12) zum Eingriff mit einem Antriebselement (110) zum Übertragen einer Drehbewegung, wobei das Antriebselement eine Vielzahl von Eingriffstaschen (150) aufweist, die mit den Zähnen des Antriebskettenrads in Eingriff stehen, wobei die Zähne einstückig mit dem Antriebskettenrad ausgebildet sind und jeder Zahn der Vielzahl von Zähnen ein Zahnprofil aufweist, das durch eine erste Seite (16) mit einer ersten Eingriffsfläche (18) und eine gegenüberliegende zweite Seite (20) mit einer zweiten Eingriffsfläche (22) definiert ist, und **dadurch gekennzeichnet, dass** die Eingriffsflächen so konfiguriert sind, dass ein Zahn beim Antrieb an einer ersten Kontaktstelle (160) auf der ersten Eingriffsfläche und auch an einer zweiten Kontaktstelle (162) auf der zweiten Eingriffsfläche in eine der Eingriffstaschen eingreift, wobei die erste Kontaktstelle radial von der zweiten Kontaktstelle versetzt ist.

2. Antriebskettenrad nach Anspruch 1, wobei jeder Zahn (12) eine Vorderseite (24) und eine Rückseite (26) aufweist, deren Form durch die erste und die zweite Seite (16, 20) definiert wird, wobei die Form jeder Seite symmetrisch um eine radiale Achse des Zahns ist und die Seiten der Seiten zumindest teilweise durch zwei Bögen definiert werden.

3.  Antriebskettenrad nach Anspruch 1 oder 2, wobei benachbarte Zähne (12) so voneinander beabstandet sind, dass sie einen Verbindungsabschnitt (30) des Kettenrads (10) definieren.

4.  Antriebskettenrad nach Anspruch 1, wobei jeder Zahn (12) eine Vorderseite (24) und eine Rückseite (26) aufweist, deren Form durch die erste und zweite Seite (16, 20) so definiert ist, dass die Form jeder Fläche symmetrisch um eine radiale Achse des Zahns ist, und die erste Seite jeder Fläche zumindest teilweise durch einen ersten Flächenbogen definiert ist und die zweite Seite jeder Fläche zumindest teilweise durch einen zweiten Flächenbogen definiert ist, wobei der Abstand zwischen der Mitte des ersten Flächenbogens und der Mitte des zweiten Flächenbogens jedes Zahns im Wesentlichen derselbe ist wie der Abstand zwischen der Mitte des ersten Flächenbogens eines ersten Zahns und der Mitte des zweiten Flächenbogens eines benachbarten Zahns.

5.  Antriebskettenrad nach Anspruch 4, wobei der erste Flächenbogen jedes Zahns (12) einen Basisabschnitt der ersten Seite (16) des besagten Zahns umfasst und der zweite Flächenbogen jedes Zahns einen Basisabschnitt der zweiten Seite (20) des jeweiligen Zahns bildet, wobei der erste und der zweite Flächenbogen jeweils eine Rollensitzkurve umfassen.

6.  Antriebskettenrad nach Anspruch 4 oder Anspruch 5, wobei jede erste und zweite Seite (16, 20) einen zweiten Abschnitt umfasst, der einen konvexen Bogen umfasst, der sich von einer jeweiligen Rollensitzkurve in Richtung eines Spitzenabschnitts eines jeweiligen Zahns (12) erstreckt.

7.  Antriebskettenrad nach einem der Ansprüche 4 bis 6, ferner umfassend eine Stützkurve, die von der Rollensitzkurve eines ersten Zahns zur Rollensitzkurve eines benachbarten Zahns (12) verläuft.

8.  Getriebesystem mit einem Antriebskettenrad (10) nach einem der Ansprüche 4 bis 7 und einem Antriebselement (110), das zum Eingriff mit dem Antriebskettenrad geeignet ist.

9.  Getriebesystem nach Anspruch 8, wobei das Antriebselement (110) eine Rollenkette umfasst und benachbarte Rollen, die die Rollenkette bilden, eine Vielzahl von Eingriffstaschen (150) definieren, von denen jede eine erste Eingriffsfläche (152) und eine zweite Eingriffsfläche (154) umfasst, die von der ersten Eingriffsfläche beabstandet ist; vorzugsweise die Rollenkette eine Teilung p aufweist, und der Abstand zwischen der Mitte des ersten Flächenbogens und der Mitte des zweiten Flächenbogens jedes Zahns sowie der Abstand zwischen der Mitte des ersten Flächenbogens eines ersten Zahns und der Mitte des zweiten Flächenbogens eines benachbarten Zahns im Wesentlichen gleich p ist.

10. Getriebesystem, das ein Antriebskettenrad nach Anspruch 1 und ein Antriebselement umfasst, das zum Eingriff mit dem Antriebskettenrad (10) geeignet ist,

    wobei das Antriebselement eine Rollenkette umfasst, die eine Vielzahl von beabstandeten Rollen (32, 34, 322, 422) umfasst, wobei jede Rolle einen vorgegebenen Abstand von benachbarten Rollen hat und mit einer benachbarten Rolle durch ein starres Verbindungselement (450, 452, 454) verbunden ist, das sich zwischen zwei benachbarten Rollen erstreckt, wodurch die Eingriffstaschen zwischen benachbarten Rollen definiert sind, wobei eine erste Eingriffstasche (401) durch erste und zweite Rollen (32, 34) gebildet wird, die nebeneinander liegen, eine zweite Eingriffstasche (402) durch die erste Rolle (32) und eine dritte Rolle (322) gebildet wird und eine dritte Eingriffstasche (403) durch die zweite Rolle (34) und eine vierte Rolle (422) gebildet wird, wobei die dritte Rolle neben der ersten Rolle liegt und die vierte Rolle neben der zweiten Rolle liegt, und wobei ein Winkel, der zwischen einem Verbindungselement, das die erste und zweite Rolle verbindet, und einem Verbindungselement, das die erste und dritte Rolle verbindet, gebildet wird, einen ersten Gelenkwinkel umfasst, und ein Winkel, der zwischen dem Verbindungselement, das die erste und zweite Rolle verbindet, und einem Verbindungselement, das die zweite und vierte Rolle verbindet, gebildet wird, einen zweiten Gelenkwinkel umfasst, wobei die Größe des ersten Gelenkwinkels, der gebildet wird, wenn die erste, zweite und dritte Rolle alle mit einem Zahn in Kontakt sind, sich von der Größe des zweiten Gelenkwinkels unterscheidet, der gebildet wird, wenn die erste, zweite und vierte Rolle alle mit einem Zahn in Kontakt sind.

11. Getriebesystem nach Anspruch 10, wobei das Antriebselement (110) eine Vielzahl von Gelenkpunkten umfasst und die Gelenkwinkel an den Gelenkpunkten definiert sind.

**12.** Getriebesystem nach Anspruch 10 oder Anspruch 11, wobei die erste Rolle eine tragende Rolle und die zweite Rolle eine Stützrolle umfasst.

**13.** Getriebesystem nach einem der Ansprüche 10 bis 12, wobei die Größe des ersten Gelenkwinkels größer ist als die Größe des zweiten Gelenkwinkels.

**14.** Getriebesystem nach einem der Ansprüche 10 bis 13, wobei die Größe jedes anderen Gelenkwinkels im Wesentlichen gleich ist.

**15.** Getriebesystem nach einem der Ansprüche 10 bis 14, wobei die Rollenkette eine Vielzahl von Innengliedern (120) umfasst, von denen jedes dazu dient, zwei Rollen zu einem Rollenpaar zu verbinden, und eine Vielzahl von Außengliedern (130), von denen jedes dazu dient, Rollenpaare miteinander zu verbinden, um die Rollenkette zu bilden, so dass ein Zwischenraum zwischen Innenflächen einander zugewandter Innenglieder und auch zwischen Innenflächen einander zugewandter Außenglieder definiert ist, wobei jeder Zahn (12) des Kettenradzahns eine Breite aufweist, die gleich oder geringfügig kleiner als der Abstand zwischen Innenflächen einander zugewandter Außenglieder und größer als der Abstand zwischen Innenflächen einander zugewandter Innenglieder ist; und optional jeder Zahn des Kettenrads eine erste Breite aufweist, die gleich oder geringfügig kleiner als der Abstand zwischen Innenflächen einander zugewandter Innenglieder ist, und eine zweite Breite, die gleich oder geringfügig kleiner als der Abstand zwischen den Innenflächen einander zugewandter Außenglieder ist.

## Revendications

**1.** Pignon d'entraînement (10) comprenant une pluralité de dents (12) destinées à s'engrener avec un élément d'entraînement (110) pour transmettre un mouvement rotatif, l'élément d'entraînement comportant une pluralité de poches de mise en prise (150) venant en prise avec les dents du pignon d'entraînement, dans lequel les dents sont formées d'un seul tenant avec le pignon d'entraînement et chaque dent de la pluralité de dents présente un profil de dent défini par un premier côté (16) comprenant une première surface de mise en prise (18) et un deuxième côté opposé (20) comprenant une deuxième surface de mise en prise (22), et **caractérisé en ce que** lesdites surfaces de mise en prise sont configurées de sorte que, lorsqu'elles sont entraînées, une dent s'engrène avec l'une des poches de mise en prise au niveau d'un premier emplacement de contact (160) sur la première surface de mise en prise et également au niveau d'un deuxième emplacement de contact (162) sur la deuxième surface de mise en prise, dans lequel le premier emplacement de contact est décalé radialement par rapport au deuxième emplacement de contact.

**2.** Pignon d'entraînement selon la revendication 1, dans lequel chaque dent (12) présente une face avant (24) et une face arrière (26), la forme desdites faces étant définie par les premier et deuxième côtés (16, 20), dans lequel la forme de chaque face est symétrique par rapport à un axe radial de la dent, et les côtés des faces sont définis au moins partiellement par deux arcs.

**3.** Pignon d'entraînement selon la revendication 1 ou la revendication 2, dans lequel des dents (12) adjacentes sont espacées les unes des autres pour définir une partie de liaison (30) du pignon (10).

**4.** Pignon d'entraînement selon la revendication 1, dans lequel chaque dent (12) présente une face avant (24) et une face arrière (26), la forme desdites faces étant définie par les premier et deuxième côtés (16, 20) de sorte que la forme de chaque face soit symétrique par rapport à un axe radial de la dent, et le premier côté de chaque face est défini au moins partiellement par un premier arc de face, et le deuxième côté de chaque face est défini au moins partiellement par un deuxième arc de face, dans lequel la distance entre le centre du premier arc de face et le centre du deuxième arc de face de chaque dent est sensiblement identique à la distance entre le centre du premier arc de face d'une première dent et le centre du deuxième arc de face d'une dent adjacente.

**5.** Pignon d'entraînement selon la revendication 4 dans lequel le premier arc de face de chaque dent (12) comprend une partie de base du premier côté (16) de ladite dent, et le deuxième arc de face de chaque dent forme une partie de base du deuxième côté (20) de la dent respective, dans lequel les premier et deuxième arcs de face comprennent chacun une courbe d'assise de rouleau.

**6.** Pignon d'entraînement selon la revendication 4 ou la revendication 5 dans lequel chacun des premier et deuxième côtés (16, 20) comprend une deuxième partie comprenant un arc convexe s'étendant à partir d'une courbe d'assise de rouleau respective vers une partie pointe d'une dent (12) respective.

7. Pignon d'entraînement selon l'une quelconque des revendications 4 à 6 comprenant en outre une courbe de support s'étendant à partir de la courbe d'assise de rouleau d'une première dent vers la courbe d'assise de rouleau d'une dent (12) adjacente.

8. Système de transmission comprenant un pignon d'entraînement (10) selon l'une quelconque des revendications 4 à 7 et un élément d'entraînement (110) adapté pour s'engrener avec le pignon d'entraînement.

9. Système de transmission selon la revendication 8 dans lequel l'élément d'entraînement (110) comprend une chaîne à rouleaux et des rouleaux adjacents formant la chaîne à rouleaux définissent une pluralité de poches de mise en prise (150), chacune desdites poches de mise en prise comprenant une première surface de mise en prise (152) et une deuxième surface de mise en prise (154) espacée de la première surface de mise en prise ; de préférence, la chaîne à rouleaux présente un pas p, et la distance entre le centre du premier arc de face et le centre du deuxième arc de face de chaque dent, et la distance entre le centre du premier arc de face d'une première dent et le centre du deuxième arc de face d'une dent adjacente est sensiblement égale à p.

10. Système de transmission comprenant un pignon d'entraînement selon la revendication 1 et un élément d'entraînement adapté pour s'engrener avec le pignon d'entraînement (10),

dans lequel l'élément d'entraînement comprend une chaîne à rouleaux comprenant une pluralité de rouleaux espacés (32, 34, 322, 422), chaque rouleau étant espacé de rouleaux adjacents d'une distance prédéterminée et relié à un rouleau adjacent par un élément de liaison rigide (450, 452, 454) s'étendant entre deux rouleaux adjacents, les poches de mise en prise étant ainsi définies entre des rouleaux adjacents,
dans lequel une première poche de mise en prise (401) est formée par de premier et deuxième rouleaux (32, 34) qui sont adjacents l'un à l'autre, une deuxième poche de mise en prise (402) est formée par le premier rouleau (32) et un troisième rouleau (322), et une troisième poche de mise en prise (403) est formée par le deuxième rouleau (34) et un quatrième rouleau (422), le troisième rouleau étant adjacent au premier rouleau et le quatrième rouleau étant adjacent au deuxième rouleau,
et dans lequel un angle formé entre un élément de liaison reliant les premier et deuxième rouleaux et un élément de liaison reliant les premier et troisième rouleaux comprend un premier angle d'articulation, et un angle formé entre l'élément de liaison reliant les premier et deuxième rouleaux et un élément de liaison reliant les deuxième et quatrième rouleaux comprend un deuxième angle d'articulation,
dans lequel l'amplitude du premier angle d'articulation formé lorsque les premier, deuxième et troisième rouleaux sont tous en contact avec une dent est différente de l'amplitude du deuxième angle d'articulation formé lorsque les premier, deuxième et quatrième rouleaux sont tous en contact avec une dent.

11. Système de transmission selon la revendication 10 dans lequel l'élément d'entraînement (110) comprend une pluralité de points d'articulation, et les angles d'articulation sont définis au niveau des points d'articulation.

12. Système de transmission selon la revendication 10 ou la revendication 11 dans lequel le premier rouleau comprend un rouleau porteur de charge et le deuxième rouleau comprend un rouleau de support.

13. Système de transmission selon l'une quelconque des revendications 10 à 12 dans lequel l'amplitude du premier angle d'articulation est supérieure à l'amplitude du deuxième angle d'articulation.

14. Système de transmission selon l'une quelconque des revendications 10 à 13 dans lequel l'amplitude de tous les autres angles d'articulation est sensiblement la même.

15. Système de transmission selon l'une quelconque des revendications 10 à 14 dans lequel la chaîne à rouleaux comprend une pluralité de maillons intérieurs (120), chacun d'eux servant à relier deux rouleaux pour former une paire de rouleaux, et une pluralité de maillons extérieurs (130), chacun d'eux servant à relier des paires de rouleaux entre elles pour former la chaîne à rouleaux, de sorte qu'un espace soit défini entre des surfaces intérieures de maillons intérieurs opposés, et également entre des surfaces intérieures de maillons extérieurs opposés, dans lequel chaque dent (12) de la dent de pignon a une largeur qui est identique ou légèrement inférieure à la distance entre des surfaces intérieures de maillons extérieurs opposés et supérieure à la distance entre des surfaces intérieures de maillons intérieurs opposés ; et, facultativement, chaque dent du pignon comprend une première largeur qui est identique ou légèrement inférieure à la distance entre des surfaces intérieures de maillons intérieurs opposés, et une deuxième largeur qui est identique ou légèrement inférieure à la distance entre les surfaces intérieures de maillons intérieurs opposés.

EP 4 182 579 B1

FIGURE 1

FIGURE 2

26

FIGURE 3

FIGURE 4

FIGURE 5

FIGURE 6

FIGURE 7

FIGURE 8

FIGURE 9

FIGURE 10

FIGURE 11

FIGURE 12

FIGURE 13

FIGURE 14

FIGURE 15

FIGURE 16

FIGURE 17

FIGURE 18

FIGURE 19

FIGURE 20

FIGURE 21

FIGURE 22

310　　　　　　　310

1140　　　　　1140

1120

1130

FIGURE 23

FIGURE 24

FIGURE 25

FIGURE 26

EP 4 182 579 B1

FIGURE 27

4120

4130

4320

4300

FIGURE 28

FIGURE 29

FIGURE 30

FIGURE 31

2300

2280

2510

2270

2310

2290

2280

2270

2290

2500

2310

FIGURE 32

FIGURE 33

FIGURE 34

FIGURE 35

Figure 36

Figure 37

Figure 38

Figure 39

Figure 40

Figure 41

Figure 42

Figure 43

Figure 44

Figure 45

Figure 46

Figure 47

**EP 4 182 579 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0611000 A1